# FASCICULE DE BREVET EUROPEEN

(11) **EP 3 769 123 B1**
(45) Date de publication et mention de la délivrance du brevet: **04.05.2022**
(21) Numéro de dépôt: 19717967.4
(22) Date de dépôt: 20.03.2019
(51) Int. Cl.: G01T 1/20, G01T 1/29

(54) **DÉTECTEUR SCINTILLATEUR MULTICOUCHE ET PROCÉDÉ DE RECONSTRUCTION D'UNE DISTRIBUTION SPATIALE D'UN FAISCEAU D'IRRADIATION**
MEHRSCHICHTIGER SZINTILLATIONSDETEKTOR UND VERFAHREN ZUR REKONSTRUIERUNG EINER ÖRTLICHEN VERTEILUNG DES STRAHLENBÜNDELS
MULTI-LAYERED SCINTILLATION DETECTOR AND METHOD FOR RECONSTRUCTING A SPATIAL DISTRIBUTION OF THE RADIATION BEAM

(30) Priorité: 22.03.2018 FR 1852480
(43) Date de publication de la demande: 27.01.2021
(73) Titulaire: Université Claude Bernard Lyon 1, 69100 Villeurbanne (FR); Institut National des Sciences Appliquées de Lyon, 69100 Villeurbanne (FR); Centre national de la recherche scientifique, 75016 Paris (FR); Hospices Civils De Lyon, 69002 Lyon (FR); CPE Lyon Formation Continue et Recherche, 69100 Villeurbanne (FR); Ecole Centrale de Lyon, 69130 Ecully (FR)
(72) Inventeur: PITTET, Patrick, 69270 Fontaines Saint Martin (FR); LU, Guo-Neng, 69190 Saint-Fons (FR); JALADE, Patrice, 69126 Brindas (FR); GALVAN, Jean-Marc, 69100 Villeurbanne (FR)
(74) Mandataire: INNOV-GROUP
(86) Numéro de dépôt international: PCT/FR2019/050637
(87) Numéro de publication internationale: WO 2019/180380

(56) Documents cités:
- WO-A2-2009/063057
- KR-B1- 101 729 266
- US-B2- 9 316 748
- M. Goulet ET AL: "OC-0224 HIGH RESOLUTION 2D DOSIMETRY USING LONG SCINTILLATING FIBERS AND TOMOGRAPHIC RECONSTRUCTION", Radiotherapy and Oncology, vol. 103, 1 May 2012 (2012-05-01), page S87, XP055526615, Ireland ISSN: 0167-8140, DOI: 10.1016/S0167-8140(12)70563-7
- Goulet ET AL: "OC-0224 HIGH RESOLUTION 2D DOSIMETRY USING LONG SCINTILLATING FIBERS AND TOMOGRAPHIC RECONSTRUCTION", Radiotherapy and Oncology, 1 January 2012 (2012-01-01), pages S87-S87, XP055526616, DOI: 10.1016/S0167-8140(12)70563-7 Retrieved from the Internet: URL:https://ac.els-cdn.com/S01678140127056 37/1-s2.0-S0167814012705637-main.pdf?_tid= d845071e-fd3c-4c4b-a3e5-a301e483c606&acdna t=1542986625_2ebe8be3e66e393aafe0424bb3432 61a

## Description

### DOMAINE TECHNIQUE

Le domaine technique de l'invention est la dosimétrie liée à des mesures et contrôles de faisceaux générés par des accélérateurs linéaires médicaux utilisés en radiothérapie et notamment les faisceaux en radiothérapie stéréotaxique.

### ART ANTERIEUR

Un certain nombre d'irradiations excessives de patients ont eu lieu, ayant pour cause une surexposition à des rayonnements ionisants lors de traitements par radiothérapie. Ces irradiations ont pu entraîner des séquelles graves, voire des décès. Il en résulte un besoin de disposer d'une meilleure qualité dans la prévision des doses administrées aux patients.

Actuellement, la dose délivrée au patient est estimée grâce à des modélisations par code de calcul. Afin d'estimer au mieux la dosimétrie au niveau des tumeurs ou des organes les plus sensibles, les données mesurées, sur lesquelles se basent les codes de calcul, doivent être mieux maîtrisées, notamment pour les petits faisceaux. La maîtrise de la dose délivrée passe par des comparaisons entre des doses modélisées et des doses mesurées en temps réel, sur un patient, ou encore entre des doses modélisées et des doses mesurées expérimentalement, sur des fantômes représentatifs du corps d'un patient.

Le problème se pose notamment dans le domaine de la radiothérapie stéréotaxique, cette modalité mettant en oeuvre successivement des faisceaux irradiants convergents de petite taille, de façon à irradier sélectivement une cible de faible volume, typiquement de l'ordre du cm³. Généralement, le faisceau irradiant présente un diamètre ou une plus grande diagonale inférieurs à quelques cm, par exemple 3 cm. La source d'irradiation peut être un radio-isotope, par exemple ⁶⁰Co, ou un accélérateur de particules, par exemple un accélérateur linéaire (LINAC), permettant l'obtention d'un faisceau de rayonnement X ou d'électrons de haute énergie, pouvant atteindre quelques dizaines de MeV. Les faisceaux irradiants convergent vers la cible à traiter soit par rotation, soit par la géométrie et le positionnement de multiples sources de ⁶⁰Co.

Le faisceau émis par la source d'irradiation traverse généralement un collimateur, notamment un collimateur multi-lames, constitué d'une pluralité de lames denses dont l'agencement permet d'obtenir une distribution spatiale de la dose correspondant à la géométrie de la cible à traiter. Chaque lame du collimateur peut être disposée de telle sorte que l'ensemble des lames délimite une ouverture adaptée à la cible. Dans certains cas, ces lames se déplacent pendant la délivrance de la dose, permettant d'adapter la fluence des photons au niveau de la cible dans l'objectif de conformer la distribution de dose au plus près de la lésion à traiter. Cette technique, dite de radiothérapie conformationnelle par modulation d'intensité (désignée par l'acronyme RCMI), permet de protéger les tissus sains adjacents de la cible, tout en concentrant la dose sur la cible. Au cours d'une rotation autour de la cible, la configuration du collimateur peut également évoluer, de façon à ce que la projection de l'ouverture sur la cible englobe cette dernière durant toute la rotation.

Les petits champs d'irradiation stéréotaxiques peuvent également être obtenus avec d'autres types de collimateurs, par exemple des collimateurs formés avec des cônes circulaires.

Les faisceaux d'irradiation mis en oeuvre en radiothérapie stéréotaxique se caractérisent par une faible taille et un fort gradient de dose, en particulier au niveau de la périphérie du faisceau. Par ailleurs, du fait de la faible taille de la zone irradiée, la condition d'équilibre électronique, dans la cible irradiée, peut ne pas être respectée. Ces particularités entraînent une incertitude lors de la modélisation de la dose intégrée au cours d'une irradiation.

Afin de vérifier la dose réellement délivrée, des mesures expérimentales sont fréquemment mises en oeuvre, à des fins d'assurance qualité. A l'heure actuelle, l'utilisation de dosimètres passifs, de type films radiochromiques ou cubes thermoluminescents, est considérée comme une méthode de référence. Ces dosimètres permettent d'obtenir une répartition bidimensionnelle quantitative de la dosimétrie, complétée par des informations ponctuelles lorsque des cubes thermoluminescents sont utilisés. Cependant, leur mise en oeuvre est complexe, longue et relativement onéreuse, ce qui est difficilement compatible avec une utilisation quotidienne. De plus, ces dosimètres ne délivrent pas une information en temps réel. En outre, ils ne sont pas adaptés à la radiothérapie stéréotaxique guidée par IRM (Imagerie par Résonance Magnétique). En effet, il a été montré que les performances de ces dosimètres peuvent être dégradées par les champs magnétiques intenses générés par I'IRM.

Différentes alternatives aux dosimètres passifs ont été étudiées. Par exemple, le document US2012/0292517 décrit un détecteur scintillateur comportant des fibres optiques scintillantes agencées parallèlement les unes aux autres. Ce détecteur est destiné à être utilisé pour le contrôle qualité lié à la radiothérapie. Il peut notamment comporter différentes couches, s'étendant parallèlement les unes des autres, les fibres d'une même couche étant orientées parallèlement les unes aux autres, selon une orientation. Mais le recours à un détecteur fibré présente plusieurs inconvénients. Une première limitation est liée à la taille des fibres, dont le diamètre est de 0.5 mm, ce qui ne permet pas d'obtenir une résolution spatiale suffisante. De plus, il est fastidieux de disposer plusieurs dizaines voire centaines de fibres les unes à côté des autres, de telle sorte que les fibres soient parallèles l'une à l'autre. Une autre limitation est liée au couplage des fibres avec un photodétecteur, les fibres étant en contact direct avec le photodétecteur. Il en résulte une conception complexe, ainsi qu'un dispositif relativement encombrant et probablement onéreux.

La publication Goulet M. "High resolution 2D measurement device based on a few long scintillating fibers and tomographic reconstruction", Med.Phys. 39 (8), august 2012, décrit l'utilisation d'un détecteur comportant des fibres optiques, de diamètre 1 mm, s'étendant parallèlement l'une à l'autre, selon un plan. Le détecteur est mobile en rotation. Lors d'une exposition du détecteur à un faisceau d'irradiation, le détecteur est successivement tourné selon différentes orientations. Les mesures réalisées à chaque orientation sont utilisées dans un algorithme de tomographie pour obtenir une répartition spatiale du faisceau d'irradiation. Un tel procédé présente les limites liées à l'utilisation des fibres optiques. De plus, il nécessite une rotation séquentielle du détecteur, cette dernière devant être précise si l'on souhaite obtenir une reconstruction tomographique de bonne qualité. L'acquisition séquentielle, selon différentes orientations, est affectée par les éventuelles variations temporelles du faisceau d'irradiation. Le procédé est donc relativement complexe à mettre en oeuvre, du fait de la présence d'un moyen de mise en rotation du détecteur. Un procédé basé sur l'utilisation de fibres optiques est également décrit dans US20140217295.

Un autre détecteur, visant le même type d'application, est décrit dans US2009/0236510. Le dispositif comporte des fibres dont une extrémité ponctuelle est scintillante, pour générer un signal lumineux représentatif d'une dose. L'extrémité scintillante est reliée à une fibre non scintillante dont la fonction est de guider le signal lumineux vers un capteur d'image, de type CCD ou CMOS. Un tel détecteur présente les mêmes inconvénients que ceux cités en lien avec US2012/0292517, à savoir un montage complexe, se traduisant par un coût élevé, ainsi qu'un certain encombrement, du fait de la présence de fibres s'étendant jusqu'au détecteur. Par ailleurs, seule l'extrémité des fibres est scintillante, le volume scintillant étant inférieur à 2 mm³.

Un tel détecteur convient dans le cas de mesures ponctuelles, mais n'est pas adapté pour la réalisation d'une mesure de la distribution spatiale de la dose dans un faisceau d'irradiation dont la diagonale est de l'ordre de 2 ou 3 cm.

Le document US9316748B2 divulgue un détecteur scintillateur multi-couche avec une structure de canaux pour contenir un scintillateur liquide. Le détecteur comprend deux couches en orientation perpendiculaire, l'une par rapport à l'autre ainsi qu'une troisième et une quatrième couche parallèle à, et décalé dans le plan par rapport aux première et deuxième couches.

Les inventeurs ont développé un détecteur simple, peu onéreux et facile à mettre en oeuvre pour mesurer expérimentalement une dose délivrée par un faisceau de rayonnement ionisant s'étendant selon une diagonale de quelques centimètres. Le détecteur permet d'évaluer simplement une répartition spatiale bidimensionnelle du faisceau d'irradiation.

### EXPOSE DE L'INVENTION

Un premier objet de l'invention est un détecteur scintillateur multicouche, comportant au moins trois couches superposées les unes aux autres, et s'étendant chacune parallèlement à un plan, dit plan de détection, le détecteur étant tel que :
- chaque couche comporte un premier matériau, dit matériau scintillateur, apte à interagir avec un rayonnement ionisant et à former, suite à l'interaction, une lumière de scintillation dans une bande spectrale de scintillation;
- chaque couche comporte une pluralité de guides de lumière s'étendant respectivement parallèlement au plan de détection, selon une longueur, et étant disposés, sur tout ou partie de leur longueur, parallèlement à un axe d'orientation;
- l'axe d'orientation des guides de lumière d'une même couche est orienté, dans le plan de détection, selon une orientation, les orientations des axes d'orientation respectifs d'au moins trois couches étant différentes les unes des autres, de telle sorte qu'à chaque couche est associée une orientation ;
- le matériau scintillateur présente un premier indice de réfraction;
le détecteur étant caractérisé en ce que chaque couche est formée d'une plaque, comportant le matériau scintillateur, s'étendant parallèlement au plan de détection, et telle que :
- la plaque comporte des canaux, ménagés dans la plaque, et s'étendant parallèlement au plan de détection, selon l'orientation associée à la couche;
- chaque canal est comblé par un deuxième matériau, d'un deuxième indice de réfraction, strictement inférieur au premier indice de réfraction ;
- de telle sorte qu'entre deux canaux adjacents s'étende un guide de lumière, formé du matériau scintillateur, et apte à générer une lumière de scintillation sous l'effet d'une irradiation par le rayonnement ionisant, et à propager la lumière de scintillation selon l'axe d'orientation de la couche.

La bande spectrale de scintillation peut se situer dans le visible ou dans le proche ultraviolet. Elle est généralement comprise dans l'intervalle spectral 200 nm - 800 nm.

Le nombre de couches est de préférence compris entre 3 et 20.

La plaque, dans laquelle sont ménagés les canaux, peut comporter une partie inférieure non scintillante, de telle sorte qu'après la formation des canaux, les guides de lumière reposent sur la partie inférieure. Cette dernière maintient les guides de lumière les uns parallèles aux autres.

Les canaux peuvent s'étendre selon tout ou partie d'une épaisseur de la plaque, et de préférence jusqu'à 90% de l'épaisseur de la plaque, l'épaisseur étant définie perpendiculairement au plan de détection.

Les guides de lumière de chaque couche sont maintenus, par la plaque, solidaires les uns des autres.

Selon un mode de réalisation, chaque guide de lumière d'une même couche s'étend, selon le plan de détection, jusqu'à une face du détecteur, dite face de détection, la face de détection étant disposée transversalement au plan de détection, et de préférence perpendiculairement à ce dernier, de telle sorte que la lumière de scintillation générée dans le guide de lumière est propagée vers la face de détection. Le dispositif peut comporter plusieurs faces de détection différentes les unes des autres, chaque face de détection comportant des extrémités de guides de lumière formés dans une même couche. Une face de détection peut comporter des extrémités de guides de lumière formés dans différentes couches.

Le détecteur peut présenter, dans le plan de détection, une section polygonale.

La hauteur d'au moins un guide de lumière, perpendiculairement au plan de détection est de préférence comprise entre 100 µm et 1 mm. La largeur d'un guide de lumière, dans le plan de détection, perpendiculairement à l'axe d'orientation selon lequel le guide de lumière s'étend, est de préférence comprise entre 100 µm et 500 µm.

Le deuxième matériau peut être de l'air. Le premier matériau peut être un scintillateur organique.

Au moins une couche peut être séparée d'une autre couche qui lui est superposée par une épaisseur d'un troisième matériau, d'un troisième indice optique, inférieur au premier indice optique et/ou opaque et/ou réfléchissant.

Selon un mode de réalisation, au moins une couche comporte un détecteur dit auxiliaire, disposé dans un canal, dit canal de mesure, le détecteur auxiliaire étant apte à induire un signal optique ou électronique lorsqu'il est exposé au rayonnement ionisant. Le détecteur auxiliaire peut être formé par un matériau solide, relié à une connexion optique ou électrique, la connexion s'étendant dans le canal de mesure. Le détecteur auxiliaire est de préférence un détecteur ponctuel, le détecteur auxiliaire présentant un volume de détection inférieur à 1 mm³ et de préférence inférieur ou égal à 0.5 mm³. Il peut s'agir d'un détecteur scintillateur, notamment en Nitrure de Gallium (GaN), relié à une fibre optique, cette dernière formant la connexion optique.

Selon un mode de réalisation, le détecteur comporte des marques, formées sur au moins une couche, à l'aide d'un matériau formant un agent de contraste lors d'un examen par Imagerie à Résonance Magnétique, de telle sorte que les marques forment des points de repère visibles lorsque le détecteur est examiné par Imagerie à Résonance Magnétique.

Un deuxième objet de l'invention est un dispositif de détection d'un rayonnement ionisant, comportant :
- un détecteur multicouche selon le premier objet de l'invention, le détecteur multicouche étant formé dans un matériau scintillateur apte à générer une lumière de scintillation lorsqu'il est exposé au rayonnement ionisant ;
- au moins un photodétecteur pixellisé, comportant plusieurs pixels ;
- de telle sorte que chaque pixel est configuré pour être optiquement couplé à un guide de lumière ménagé dans une couche du détecteur multicouche, de façon à collecter la lumière de scintillation émanant du guide de lumière auquel il est couplé.

Le dispositif peut comporter au moins un système optique de couplage, de telle sorte que chaque pixel est optiquement couplé à un guide de lumière par le système optique de couplage. Le système optique de couplage peut comporter des fibres optiques ou une ou plusieurs lentilles.

Selon un mode de réalisation, au moins une couche du détecteur scintillateur multicouche comporte un détecteur auxiliaire, disposé dans un canal, dit canal de mesure, le détecteur auxiliaire étant apte à induire un signal optique ou électronique lorsqu'il est exposé au rayonnement ionisant, le dispositif de détection comportant une unité de mesure, reliée au détecteur auxiliaire, et configurée pour mesurer un niveau d'irradiation détecté par le détecteur auxiliaire. Le détecteur auxiliaire peut être un scintillateur de type GaN, relié à une fibre optique, la fibre optique s'étendant dans le canal de mesure.

Un troisième objet de l'invention est un procédé de reconstruction d'une distribution spatiale bidimensionnelle d'un faisceau d'irradiation émis par une source d'irradiation, à l'aide du dispositif de détection selon le deuxième objet de l'invention, le procédé comportant les étapes suivantes :
a) irradiation du détecteur scintillateur multicouche du dispositif de détection par une source d'irradiation, le scintillateur multicouche s'étendant selon un plan de détection, la source d'irradiation formant un faisceau d'irradiation se propageant à travers le plan de détection ;
b) détection, par des pixels du dispositif de détection, d'une quantité de lumière de scintillation émanant de chaque couche du scintillateur multicouche, de façon à obtenir, pour chaque couche du scintillateur, une projection du faisceau d'irradiation, dans le plan de détection, selon l'orientation des guides de lumière de chaque couche;
c) à partir de chaque projection obtenue selon l'étape b), estimation d'une distribution spatiale bidimensionnelle du faisceau d'irradiation dans le plan de détection.
Selon un mode de réalisation,
- le détecteur scintillateur multicouche comporte un détecteur auxiliaire, disposé dans un canal, dit canal de mesure, le détecteur auxiliaire étant apte à induire un signal optique ou électronique lorsqu'il est exposé au rayonnement ionisant ;
- le dispositif de détection comporte une unité de mesure, reliée au détecteur auxiliaire, et configurée pour mesurer un niveau d'irradiation détecté par le détecteur auxiliaire ;
- le procédé peut alors comporter une étape d) de recalage de la distribution spatiale bidimensionnelle estimée lors de l'étape c) à partir du niveau d'irradiation détecté par le détecteur auxiliaire.

Les étapes a) à c) peuvent être effectuées en disposant un détecteur scintillateur multicouche à différentes distances de la source d'irradiation, de façon à obtenir, pour chaque distance, une distribution spatiale bidimensionnelle de l'irradiation.

D'autres avantages et caractéristiques ressortiront plus clairement de la description qui va suivre de modes particuliers de réalisation de l'invention, donnés à titre d'exemples non limitatifs, et représentés sur les figures listées ci-dessous.

### FIGURES

Les figures 1A, 1B et 1C montrent les principaux composants d'un poste de radiothérapie stéréotaxique.
La figure 2A schématise un exemple de scintillateur multicouche selon l'invention. La figure 2B est un détail de la figure 2A.
Les figures 3A, 3B et 3C sont des vues de dessus des couches du scintillateur multicouche représenté sur la figure 2A.
Les figures 4A est un schéma d'un dispositif de détection mettant en oeuvre le scintillateur multicouche décrit en lien avec les figures 2A à 3C. La figure 4B illustre une variante du dispositif de détection.
La figure 5A représente un autre exemple de scintillateur multicouche, de section trapézoïdale.
La figure 5B est un autre exemple de scintillateur multicouche, de section pentagonale.
Les figures 6A, 6B et 6C schématisent un autre exemple de scintillateur multicouche, agencé de façon à présenter qu'une seule face de détection.
La figure 7 illustre une couche d'un scintillateur multicouche selon un mode de réalisation mettant en oeuvre un détecteur auxiliaire.
Les figures 8A et 8B montrent des résultats expérimentaux obtenus en mettant en oeuvre un scintillateur multicouche. Il en est de même des figures 9A à 9E.
Les figures 10A, 10B, 10C, 10D, 10E et 10F schématisent différentes orientations respectivement associées aux couches d'un scintillateur multicouche.
Les figures 11A à 11C concernent une reconstruction d'une distribution spatiale bidimensionnelle d'un faisceau d'irradiation émis par une source d'irradiation. La figure 11A décrit les principales étapes du procédé de reconstruction. La figure 11B montre une image d'un collimateur multi-lames mis en oeuvre. La figure 11C montre une estimation d'une distribution spatiale bidimensionnelle obtenue à l'aide du procédé illustré en lien avec la figure 11A.
Les figures 12A et 12B illustrent chacune un fantôme comportant plusieurs scintillateurs multicouche.

### EXPOSE DE MODES DE REALISATION PARTICULIERS

Sauf s'il en est explicitement disposé autrement, le terme "un" est à interpréter comme signifiant "au moins un". Par ailleurs, on se place dans un repère orthogonal défini par les axes X, Y et Z, l'axe Z correspondant à l'axe vertical.

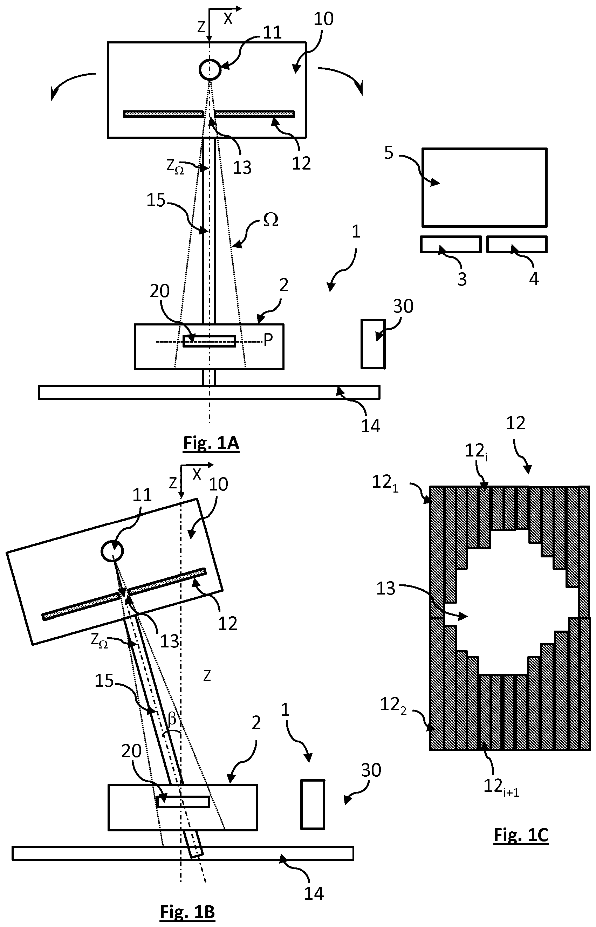

La figure 1A schématise les principaux composants d'une installation de radiothérapie stéréotaxique. L'installation comporte une tête 10, maintenue par un bras 15, et comportant une source d'irradiation 11 disposée face à un collimateur multilames 12, ce dernier définissant une ouverture 13. Le collimateur multilames définit une ouverture 13 paramétrable, permettant le passage d'un faisceau Ω de rayonnement ionisant émis par la source d'irradiation 11, pour définir une étendue spatiale du faisceau d'irradiation. Par rayonnement ionisant, il est entendu un faisceau de photons ionisants, par exemple des photons y ou des photons X, ou un faisceau particules chargées, par exemple des protons ou des électrons. La source d'irradiation 11 peut être un radio-isotope, et comprendre par exemple une ou plusieurs sources de ⁶⁰Co. Alternativement, elle peut comporter un accélérateur de particules, configuré pour émettre un faisceau de rayonnement X dont l'énergie est distribuée selon un spectre d'énergie. D'une façon générale, la source d'irradiation produit un faisceau d'irradiation intense Ω, selon un axe d'irradiation Z_{Ω}, de façon à exposer un tissu cible, par exemple une tumeur cancéreuse, à une exposition préalablement définie. L'exposition, ou dose, correspond à une quantité d'énergie absorbée par le tissu irradié, généralement exprimée par unité de masse. Lorsque cette exposition est également exprimée par unité de temps, l'exposition est exprimée en terme de débit de dose, ou dose instantanée. L'exposition dépend de la distribution spatiale du débit de dose.

L'énergie du rayonnement ionisant peut être comprise entre 500 keV et 22 MeV lorsque la source d'irradiation comporte un accélérateur de particules. Lorsqu'il s'agit d'une source isotopique, l'énergie du rayonnement correspond principalement aux raies d'émission de la source. Dans le cas de ⁶⁰Co, les énergies d'émission de ces raies sont égales à 1173 keV et 1332 keV.

Le patient subissant le traitement de radiothérapie est généralement disposé sur une table 14. Dans cet exemple, on a représenté un fantôme 2, simulant le corps d'un patient. Le fantôme peut être réalisé selon différents matériaux présentant une atténuation comparable au corps d'un patient (numéro atomique et densité très proches de ceux des tissus), par exemple un matériau organique de type PMMA (Polyméthacrylate de Méthyle). Un tel fantôme est désigné par le terme "équivalent tissu".

On a représenté un dispositif de détection 1, permettant d'estimer la dose générée par le faisceau d'irradiation Ω, et d'en estimer une distribution spatiale bidimensionnelle selon un plan. Le dispositif de détection 1 comporte un scintillateur multicouche 20 ainsi qu'au moins un photodétecteur pixelisé 30. Le scintillateur multicouche 20 s'étend essentiellement selon un plan, dit plan de détection P. Sous l'effet du faisceau d'irradiation, le scintillateur multicouche génère une lumière de scintillation, cette dernière étant guidée vers le photodétecteur 30. La lumière de scintillation est générée dans une bande spectrale de scintillation, cette dernière dépendant du matériau scintillateur utilisé. La bande spectrale de scintillation est généralement dans le domaine de visible ou dans le proche ultraviolet, donc comprise entre 100 nm et 800 nm.

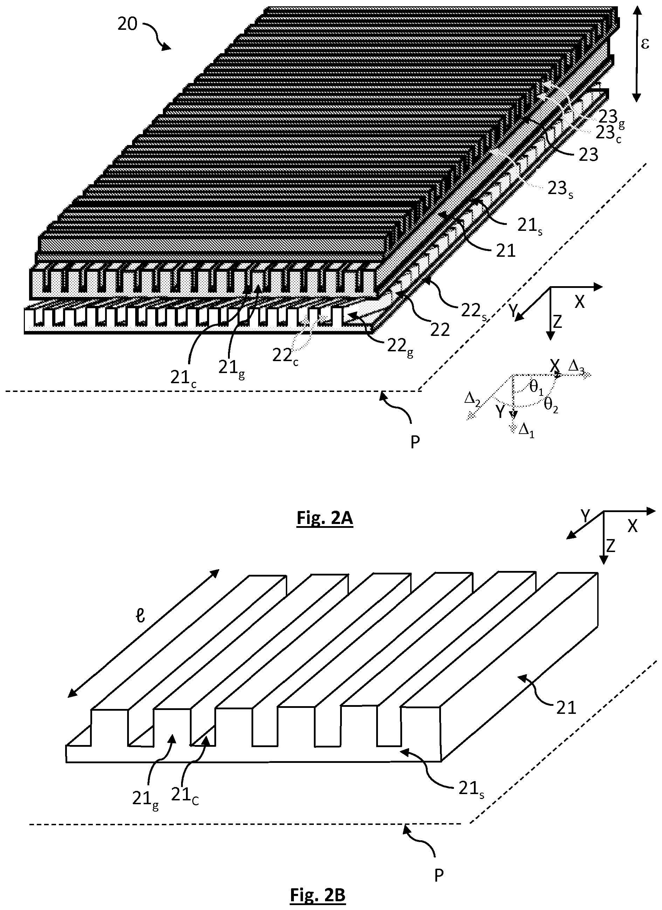

Le photodétecteur 30 est situé à distance du scintillateur multicouche 20. Le dispositif de détection 1 comporte également un processeur 3, par exemple un microprocesseur, relié à une mémoire 4, comportant des instructions pour mettre en œuvre les procédés de détection et de reconstruction décrits ci-après. Le processeur 3 peut être relié à un écran 5. Le dispositif de détection 1, et plus particulièrement le scintillateur multicouche 20, forment un aspect important de l'invention, décrit plus largement dans les figures 2A et suivantes.

Dans l'exemple de la figure 1A, le faisceau d'irradiation émis par la source 11 s'étend selon un axe Z_{Ω}, confondu avec l'axe vertical Z. La tête d'irradiation 10 est mobile en rotation autour de la table 14. La figure 1B représente l'installation décrite en lien avec la figure 1A, dans laquelle le bras 15 a subi une rotation d'un angle β dans un plan vertical XZ. Le faisceau d'irradiation Ω est toujours dirigé vers le fantôme 2. L'intersection des axes d'irradiation Z_{Ω} au cours des différentes rotations de la tête d'irradiation correspond au centre du tissu cible à traiter, également désigné par le terme "isocentre".

L'étendue spatiale du faisceau d'irradiation Ω, perpendiculairement à l'axe d'irradiation Z_{Ω}, est déterminée par le collimateur multilames 12. Un tel collimateur est représenté sur la figure 1C. Il comporte une pluralité de lames denses 12₁, 12₂...12ᵢ, 12_{i+1...} réalisées selon un matériau dont le numéro atomique est élevé, de façon à atténuer le rayonnement ionisant émis par la source. Il peut en particulier s'agir d'un alliage de tungstène. Chaque lame est mobile en translation, dans un plan perpendiculaire à l'axe d'irradiation Z_{Ω}, de façon à délimiter l'étendue spatiale du faisceau d'irradiation Ω. Cette dernière est définie par l'ouverture 13 s'étendant entre les lames du collimateur 12. Dans l'exemple représenté, une lame 12ᵢ est située face à une lame opposée 12ᵢ₊₁. L'ouverture 13 du collimateur 12 est paramétrée en rapprochant ou en éloignant chaque lame 12ᵢ de la lame 12ᵢ₊₁ qui lui est opposée. Ainsi, l'ouverture 13 est aisément modulable, et peut être modifiée en continu et/ou à chaque rotation de la tête d'irradiation 10, entre deux irradiations successives. La modulation de l'ouverture 13 est effectuée, selon un protocole de traitement, en prenant en compte le volume du tissu cible ainsi que la présence de tissus sains adjacents du tissu cible, ou s'étendant dans le faisceau d'irradiation Ω en amont ou en aval du tissu cible.

Comme indiqué dans l'art antérieur, le diamètre ou la plus grande diagonale d'une section du faisceau d'irradiation Ω, perpendiculairement à l'axe de propagation Z_{Ω}, peuvent être inférieurs à 5 cm, voire à 3 cm. Généralement, au niveau du tissu cible, la surface du faisceau d'irradiation Ω, perpendiculairement à l'axe d'irradiation Z_{Ω}, est inférieure à 50 mm².

La figure 2A représente un exemple de scintillateur multicouche 20 formant un objet de l'invention. Le scintillateur multicouche comporte trois couches distinctes 21, 22 et 23. Les trois couches s'étendent parallèlement à un plan de détection P, correspondant dans cet exemple au plan XY. On va décrire la première couche 21, sachant que sa structure est similaire à celle de la deuxième couche 22 et de la troisième couche 23.

La première couche 21 est formée d'une plaque support 21ₛ, également désignée par le terme "feuille scintillante", réalisée selon un premier matériau, dit matériau scintillateur. La plaque support 21ₛ s'étend selon le plan de détection P. Comme précédemment évoqué, le premier matériau est un matériau scintillateur, apte à générer une lumière de scintillation lorsqu'il est exposé à une irradiation. Le matériau scintillateur est par exemple un scintillateur organique. En effet, un tel scintillateur est dit "équivalent tissu" : lorsqu'il est exposé à un faisceau d'irradiation, il génère une lumière de scintillation dont l'intensité est proportionnelle à une dose instantanée qui serait délivrée à un tissu biologique. Les scintillateurs organiques sont des matériaux fréquemment utilisés dans le domaine de la mesure nucléaire. Ils peuvent être disponibles dans différentes tailles, à un coût raisonnable. Leur temps de réponse est rapide et ils présentent une rémanence généralement faible, les rendant particulièrement appropriés à des expositions répétées à des faisceaux d'irradiation intenses. De plus, ils peuvent être aisément structurés par des procédés de microstructuration simples. Dans le cas présent, le matériau utilisé est la référence BC408 du fabricant Saint Gobain Crystals. Il peut émettre une lumière de scintillation selon une bande spectrale de scintillation centrée sur la longueur d'onde 425 nm. D'autres matériaux scintillateurs organiques connus de l'homme du métier, peuvent être utilisés, et par exemple la référence BC412 (Saint Gobain Crystals), ou encore les références SCSF-78, SCSF-81, SCSF-3HF (Kuraray), ou la référence EJ200 (Eljen Technologies). Il est également possible d'utiliser une résine scintillante, par exemple la référence BC490 (Saint-Gobain Crystals).

Le matériau scintillateur dispose d'un premier indice de réfraction optique ni. Généralement, le premier indice de réfraction est, à une longueur d'onde de 450 nm, supérieur ou égal à 1.3, voire à 1.5. Dans le cas du BC408, l'indice de réfraction est égal à 1.58 à cette longueur d'onde.

La plaque support 21ₛ a été structurée, de façon à former des canaux creux 21_{c} s'étendant le long de la plaque, selon une longueur ℓ. Sur tout ou partie de la longueur ℓ, les canaux creux 21_{c} s'étendent parallèlement les uns aux autres, en étant orientés selon un premier axe d'orientation Δ₁. Le premier axe orientation Δ₁ est coplanaire du plan de détection P selon lequel s'étend la première plaque support 21ₛ. L'épaisseur de la plaque support 21ₛ, avant la formation des canaux 21_{c}, peut être comprise entre 100 µm et 5 mm. Elle est de préférence inférieure à 2 mm, et encore de préférence inférieure à 1 mm. Les canaux sont formés selon tout ou partie d'une épaisseur de la plaque support 21ₛ, l'épaisseur de la plaque s'entendant perpendiculairement au plan de détection.

La structuration des canaux 21_{c} permet de délimiter des guides de lumière 21_{g}, chaque guide de lumière s'étendant entre deux canaux adjacents, parallèlement à ces derniers. Il est important que les guides de lumière s'étendent parallèlement les uns aux autres, selon le premier axe d'orientation Δ₁, dans au moins une partie centrale de la couche 21, destinée à être exposée au faisceau d'irradiation Ω. Dans l'exemple représenté, les canaux 21_{c} et guides de lumière 21_{g} s'étendent parallèlement les uns aux autres, selon le premier axe d'orientation Δ₁, selon toute leur longueur.

La figure 2B montre un détail de la première couche 21. Après formation des canaux 21_{c}, il peut subsister, au niveau de ces derniers, une partie amincie de la plaque support 21ₛ, cette dernière présentant une épaisseur résiduelle comprise entre 10 µm et 100 µm. Après la structuration, la plaque support porte les guides de lumière et assure leur maintien. Chaque canal 21_{c} s'étend:
- perpendiculairement au premier axe d'orientation Δ₁ (orienté selon l'axe Y), selon une largeur préférentiellement comprise entre 10 µm et 100 µm, et de préférence entre 40 µm et 80 µm, par exemple 60 µm ;
- perpendiculairement au plan de détection P, selon une profondeur de préférence comprise entre 50% et 90% de l'épaisseur initiale de la plaque support 21ₛ. Elle est de préférence comprise entre 100 µm et 1 mm. Dans cet exemple, la profondeur de chaque canal 21_{c} est de 500 µm. La profondeur conditionne la sensibilité de détection.

Après structuration de la plaque support 21ₛ, chaque canal 21_{c} est rempli d'un deuxième matériau, différent du premier matériau composant la plaque support 21ₛ. Le deuxième matériau a un indice de réfraction n₂ inférieur à celui du premier matériau. Dans les exemples décrits, le deuxième matériau est de l'air. Le deuxième matériau est, de préférence, non scintillant.

Selon un mode de réalisation, la plaque support comporte une partie inférieure, correspondant à la partie amincie, formée d'un matériau support différent du matériau scintillateur. Le matériau support est de préférence non scintillant, et son indice de réfraction est avantageusement inférieur à l'indice de réfraction du matériau scintillateur. Le matériau support est par exemple un matériau plastique. Après la formation des canaux, les guides de lumière 21_{g} sont maintenus par la partie inférieure de la plaque support 21ₛ, cette dernière faisant office de support non scintillant. Le matériau support peut avoir, de préférence, un indice de réfraction inférieur à l'indice de réfraction du matériau scintillateur.

Entre deux canaux 21_{c} adjacents s'étend un guide de lumière 21_{g}. La hauteur du guide de lumière, perpendiculairement au plan de détection P, correspond à la profondeur des canaux adjacents. Plus elle est élevée, plus la sensibilité de détection est importante. A l'instar des canaux 21_{c}, chaque guide de lumière 21_{g} s'étend selon l'axe d'orientation Δ₁ de la première couche 21. La largeur d'un guide de lumière, perpendiculairement à l'axe d'orientation Δ₁, est de préférence comprise entre 100 µm et 500 µm, par exemple entre 200 µm et 300 µm. Cette largeur conditionne la résolution spatiale de la détection, comme on le comprend sur les essais expérimentaux décrits ci-après.

La première plaque 21ₛ, ainsi structurée, forme une première couche 21 du scintillateur multicouche 20. Sous l'effet d'une exposition à un faisceau irradiation Ω, une lumière de scintillation est générée par la première couche 21, en particulier au sein de chaque guide de lumière (ou guide d'onde) 21_{g}, le volume de la première couche 21 étant essentiellement constitué par les guides de lumière 21_{g}. Du fait de la différence d'indice de réfraction entre chaque guide de lumière 21_{g} et les canaux 21_{c} lui étant adjacents, la lumière de scintillation générée au sein de chaque guide de lumière 21_{g} se propage dans ce dernier, selon l'axe d'orientation Δ₁.

La structuration de la première couche peut être effectuée par une méthode associant un procédé de gravure et une lithographie, par exemple une photolithographie, ou par thermoformage de type "hot embossing", ou par moulage ou encore par micro-usinage. Elle permet d'obtenir simultanément un grand nombre de guides d'onde, de faible largeur, au sein d'une même couche, ce nombre dépassant 100, voire 1000. Cela permet d'effectuer des mesures en bénéficiant d'une résolution spatiale élevée. Lorsqu'on met en oeuvre la photolithographie, il peut s'agir d'une photolithograhie UV, par exemple à 375 nm, à travers un masque chrome sur verre. On obtient ainsi un scintillateur structuré.

La structuration de la plaque support permet d'obtenir simultanément des guides d'onde de faible largeur, rapprochés les uns des autres de quelques dizaines de microns, et solidaires les uns des autres. Les guides d'ondes sont fixes les uns par rapport aux autres, en étant maintenus par la partie amincie de la plaque support. Une couche ainsi réalisée est aisément manipulable.

La deuxième couche 22 et la troisième couche 23 ont une structure analogue à la première couche 21. Elles s'étendent selon le même plan de détection P. Ainsi, la deuxième couche comporte des guides de lumière 22_{g}, délimités par des canaux 22_{c}, et s'étendant, sur au moins une partie de leur longueur, parallèlement à un deuxième axe d'orientation Δ₂. Le deuxième axe d'orientation est parallèle au plan de détection P, mais non parallèle au premier axe d'orientation Δ₁. Ainsi, lorsque la deuxième couche est exposée à un faisceau d'irradiation, une lumière de scintillation est générée dans chaque guide de lumière 22_{g}, et se propage dans chacun d'entre deux, selon le deuxième axe d'orientation Δ₂.

De même, la troisième couche comporte des guides de lumière 23_{g}, délimités par des canaux 23_{c}, et s'étendant, sur au moins une partie de leur longueur, parallèlement à un troisième axe d'orientation Δ₃. Le troisième axe d'orientation est parallèle au plan de détection P, mais non parallèle au premier axe d'orientation Δ₁, ni au deuxième axe d'orientation Δ₂.

Sur la figure 2A, on a représenté les axes d'orientation Δ₁, Δ₂ et Δ₃ par rapport au repère XY du plan de détection P. On désigne par angle d'orientation l'angle entre le vecteur X du repère XY et l'axe d'orientation de la couche. A chaque couche est associée une orientation, définie par l'angle d'orientation. Ainsi :
- à la première couche 21 est associée une première orientation θ₁, selon laquelle se propage la lumière de scintillation générée dans ladite couche. Dans cet exemple, θ₁ ≈ 90°.
- A la deuxième couche 22 est associée une deuxième orientation θ₂, selon laquelle se propage la lumière de scintillation générée dans ladite couche. Dans cet exemple, θ₂ = 135°.
- A la troisième couche 23 est associée une troisième orientation θ₃, selon laquelle se propage la lumière de scintillation générée dans ladite couche. Dans cet exemple, θ₃ = 0°. L'angle θ₃ n'est pas représenté sur la figure 2A.

Deux couches peuvent être directement superposées l'une à l'autre. De façon alternative, un troisième matériau, d'un troisième indice de réfraction n₃, peut s'étendre entre deux couches adjacentes. Le troisième matériau peut être identique au deuxième matériau, par exemple de l'air. Dans ce cas, des entretoises permettent d'espacer deux couches superposées. Lorsque les deux couches adjacentes ne sont pas au contact l'une de l'autre, la distance les séparant est de préférence la plus faible possible, par exemple comprise entre 10 µm et 100 µm. Le troisième indice de réfraction n₃ est de préférence inférieur au premier indice de réfraction n₁, dans la bande spectrale de scintillation, notamment lorsque le troisième matériau est transparent dans la bande spectrale de scintillation. Cela permet un meilleur confinement de la lumière dans les guides de lumière. De façon alternative, le troisième matériau peut être un matériau opaque, de façon à isoler optiquement les deux couches superposées qu'il sépare. Le troisième matériau peut également être réfléchissant. Lorsque la plaque support comporte une partie inférieure formée par un matériau non scintillateur, comme précédemment décrit, le matériau non scintillateur peut être le troisième matériau.

L'épaisseur ε du scintillateur multicouche structuré 20, perpendiculairement au plan de détection P, est la plus faible possible, de telle sorte que les couches puissent être considérées comme exposées à un même faisceau d'irradiation, selon un même plan. L'épaisseur ε du scintillateur multicouche doit cependant permettre que chaque couche présente une épaisseur suffisante pour que la sensibilité de détection soit acceptable. L'épaisseur ε du scintillateur multicouche varie selon le nombre de couches, mais il est préférable qu'elle soit inférieure à 2 cm ou 1 cm.

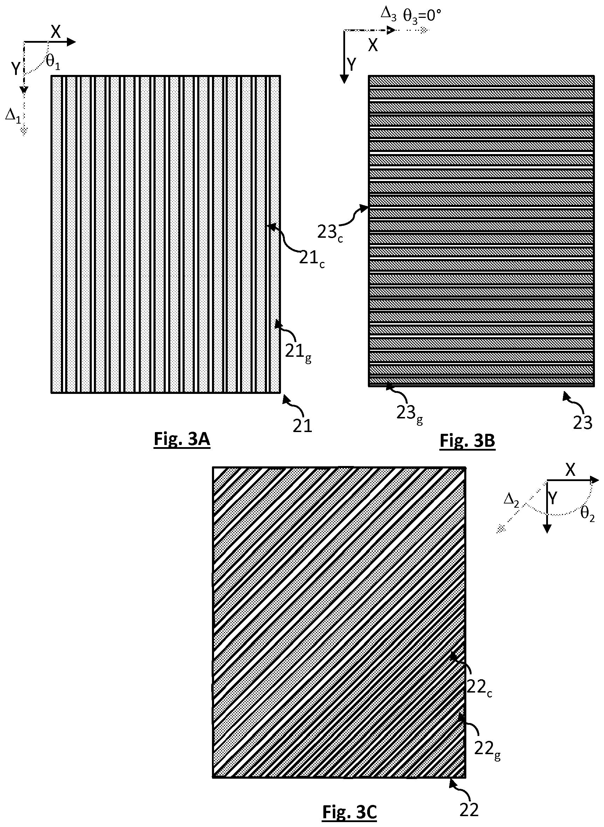

Les figures 3A, 3B et 3C représentent des vues de dessus respectives de la première couche 21, de la troisième couche 23 et de la deuxième couche 22. Ces vues permettent d'apprécier les angles d'orientation θ₁, θ₃ et θ₂ respectivement associés à chaque couche, chaque angle d'orientation étant différent l'un de l'autre.

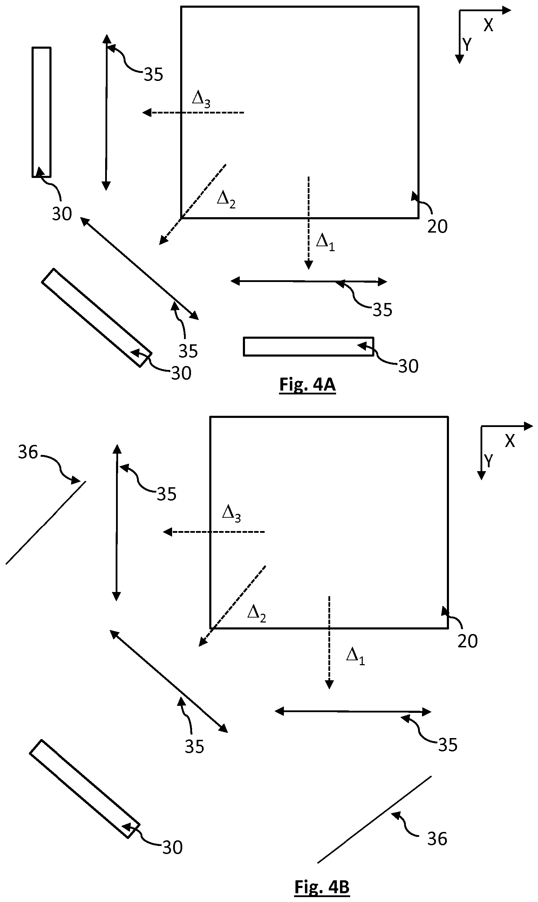

La figure 4A représente le dispositif de détection 1, comportant le scintillateur multicouche 20 décrit en lien avec les figures 2A à 3C. Le dispositif comporte trois photodétecteurs pixelisés 30. Chaque photodétecteur comprend des pixels s'étendant selon un plan de pixels. Les photodétecteurs sont agencés de telle sorte que leurs plans de pixels respectifs soient respectivement perpendiculaires au premier axe d'orientation Δ₁, au deuxième axe d'orientation Δ₂ et au troisième axe d'orientation Δ₃. Ainsi, chaque photodétecteur pixelisé 30 est associé à une couche, et peut acquérir un signal résolu spatialement, représentatif de la lumière de scintillation émanant des guides de lumière ménagés dans la couche. Des systèmes optiques 35, de type objectif ou lentille, assurent un couplage optique entre chaque photodétecteur et les guides de lumière de la couche auquel le photodétecteur pixelisé est associé. Dans cet exemple, on a représenté trois photodétecteurs distincts l'un de l'autre, et fixes par rapport au scintillateur multicouche 20. Cela permet une acquisition simultanée de la lumière de scintillation générée dans chaque couche. Selon une variante, on peut prévoir qu'un photodétecteur pixelisé 30 soit déplacé entre plusieurs positions successives, de façon à collecter, à chaque position, la lumière de scintillation guidée par les guides d'onde d'une couche.

De préférence, à chaque position du photodétecteur pixelisé 30, la relation entre les pixels collectant la lumière de scintillation est bijective, de telle sorte qu'à un guide de lumière est optiquement couplé à un pixel, ou un groupe de pixels, les pixels optiquement couplés à un guide de lumière étant différents des pixels optiquement couplés à un autre guide de lumière. Selon une variante, plusieurs guides de lumière sont optiquement couplés à un même pixel.

La figure 4B illustre une variante de la figure 4A, selon laquelle la lumière émanant des guides de lumière de certaines couches est réfléchie par des miroirs 36, vers un photodétecteur 30 s'étendant face à une autre couche. Dans cet exemple, le photodétecteur pixelisé 30 est situé face à la deuxième couche 22. Des miroirs 36 permettent de réfléchir la lumière de scintillation guidée par les guides de lumière respectifs de la première et de la troisième couche, vers le photodétecteur pixelisé 30. L'utilisation de tels miroirs permet de limiter le nombre de photodétecteurs à utiliser, tout en permettant une acquisition simultanée de la lumière de scintillation générée dans plusieurs couches.

Il est possible de prévoir un couplage des guides de lumière d'une couche, aux pixels d'un photodétecteur, par des fibres optiques. Cependant, il est préférable que ce couplage soit effectué par un système optique 35, ce qui est moins complexe à mettre en oeuvre. Cela permet également de maintenir chaque photodétecteur 30 à distance du scintillateur multicouche 20. Alternativement, les guides de lumière peuvent être directement couplés aux pixels du photodétecteur. Dans un tel cas, il est préférable qu'un fluide de couplage optique, de type huile ou gel de couplage, soit disposé à l'interface entre les pixels et les guides de lumière, de façon à obtenir une adaptation d'indice entre les guides de lumière et les pixels.

Le photodétecteur pixelisé 30 peut être un capteur d'image, de type CCD ou CMOS. Les différentes couches du scintillateur multicouche 20 étant décalées les unes des autres selon l'axe d'irradiation Z_{Ω}, un même photodétecteur 30 peut adresser simultanément plusieurs couches, les pixels optiquement couplés à une couche étant différents des pixels optiquement couplés à une autre couche. Il est également possible d'utiliser des capteurs linéaires, comportant une barrette de pixels s'étendant selon une ligne. De tels capteurs peuvent être appliqués directement contre les guides de lumière débouchant d'une couche, voire de chaque couche. Un exemple d'un capteur linéaire est la référence S11865-128 (Hamamatsu). Le couplage direct d'un capteur contre les guides de lumière d'une couche améliore la compacité et peut être réalisé à partir de capteurs linéaires peu onéreux et répandus.

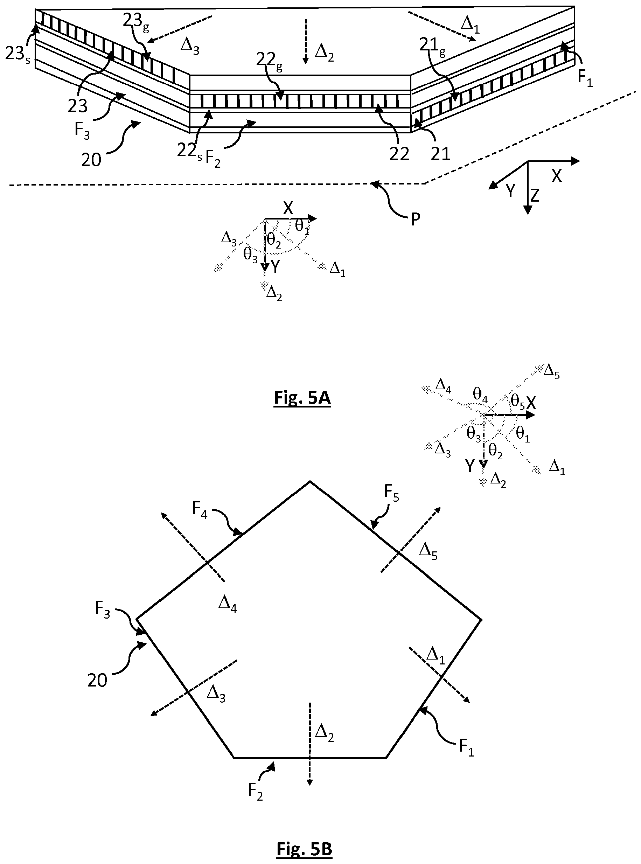

La figure 5A représente un scintillateur multicouche 20 dont la section transversale, perpendiculairement au faisceau d'irradiation, décrit une surface trapézoïdale. On a représenté une première couche 21, une deuxième couche 22 et une troisième couche 23. La première couche 21 comporte des guides de lumière 21_{g}, s'étendant selon un axe d'orientation Δ₁, selon une orientation θ₁ par rapport à l'axe X. Les guides de lumière 21_{g} débouchent d'une première face F1, formant un plan transversal au plan de détection P, ce dernier correspondant au plan XY. La première face F1 est dans cet exemple perpendiculaire au plan de détection P, ce qui correspond à une configuration préférée. La deuxième couche 22 comporte des guides de lumière 22_{g}, s'étendant selon un axe d'orientation Δ₂, selon une orientation θ₂ par rapport à l'axe X. Les guides de lumière 22_{g} débouchent d'une deuxième face F2, perpendiculaire au plan de détection P. La troisième couche 23 comporte des guides de lumière 23_{g}, s'étendant selon un axe d'orientation Δ₃, formant une orientation θ₃ par rapport à l'axe X. Les guides de lumière 23_{g} débouchent d'une troisième face F3, perpendiculaire au plan de détection P. Sur chaque couche, les guides de lumière s'étendent à partir d'une partie amincie des plaques 21ₛ, 22ₛ, 23ₛ, chaque partie amincie correspondant à une partie résiduelle de la plaque initiale, sous les canaux.

Au moins une face, et de préférence chaque face peut comporter un masque opaque recouvrant la face, à l'exception des guides de lumière débouchant de ladite face. Le masque opaque peut être obtenu par application d'un revêtement opaque sur la face. Il peut par exemple s'agir d'une peinture opaque ou d'une feuille absorbante, appliquée sur la face. Cela évite qu'une lumière de scintillation, non guidée par un guide de lumière, émane d'une face du scintillateur multicouche, en débouchant notamment d'une partie amincie d'une plaque. L'ajout du masque opaque sur une ou plusieurs faces peut concerner l'ensemble des modes de réalisation. Le masque opaque peut être réfléchissant.

La figure 5B représente une autre configuration, selon laquelle le scintillateur multicouche 20 présente une section transversale, perpendiculairement au faisceau d'irradiation, décrivant une surface pentagonale. Dans cet exemple, le scintillateur multicouche comporte cinq couches, s'étendant respectivement selon un premier axe d'orientation Δ₁, un deuxième axe d'orientation Δ₂, un troisième axe d'orientation Δ₃, un quatrième axe d'orientation Δ₄, un cinquième axe d'orientation Δ₅. Les cinq couches définissent respectivement cinq orientations distinctes θ₁, θ₂, θ₃, θ₄, θ₅. D'autres configurations sont naturellement envisageables, la section transversale du scintillateur multicouche 20 pouvant présenter une forme hexagonale, octogonale, ou de façon plus générale une forme polygonale.

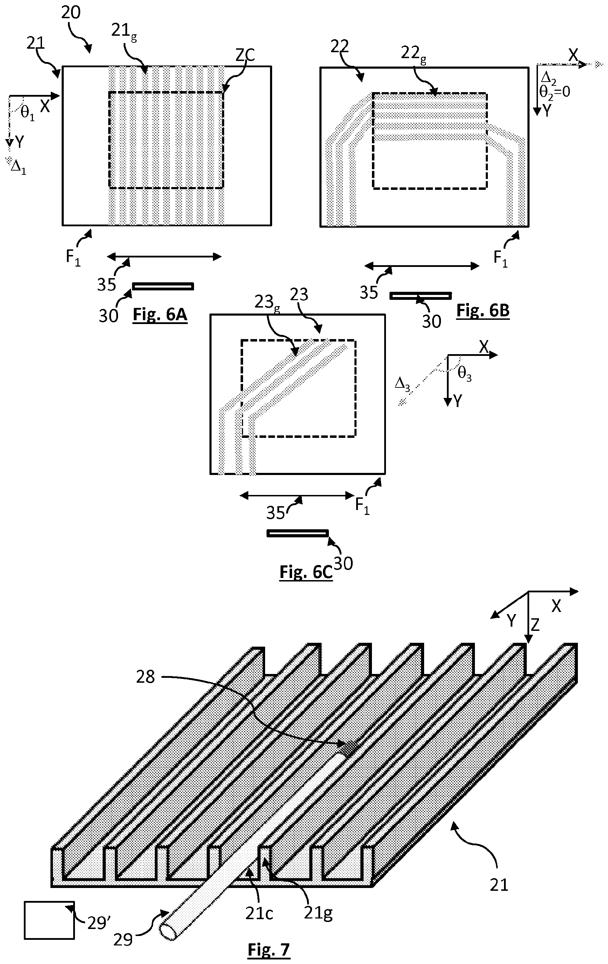

Les figures 6A à 6C illustrent une autre configuration, selon laquelle le scintillateur multicouche 20 comporte trois couches 21, 22, 23 superposées les unes aux autres. Chaque couche s'étend parallèlement l'une à l'autre. Au niveau d'une zone centrale ZC du scintillateur, matérialisée par un cadre en pointillés, chaque couche comporte des guides de lumière s'étendant parallèlement l'un à l'autre, selon une orientation associée à chaque couche. Ainsi :
- dans la première couche 21, les guides d'onde 21_{g} s'étendent selon un axe d'orientation Δ₁, définissant une orientation θ₁ ;
- dans la deuxième couche 22, les guides d'onde 22_{g} s'étendent selon un axe d'orientation Δ₂, définissant une orientation θ₂ ;
- dans la troisième couche 23, les guides d'onde 23_{g} s'étendent selon un axe d'orientation Δ₃, définissant une orientation θ₃.

La zone centrale ZC du scintillateur 20 englobe une projection de l'ouverture 13, définie par le collimateur 12, selon l'axe Z_{Ω} du faisceau d'irradiation Ω, sur le plan de détection P selon lequel s'étend chaque couche. La projection du faisceau d'irradiation dans le plan de détection P est désignée par le terme "champ d'irradiation".

En dehors de la zone centrale ZC, les guides d'onde d'une même couche sont dirigés vers une même face de détection F1, cette dernière étant commune à plusieurs couches, et en l'occurrence à l'ensemble des couches. Le fait que les guides de lumière de plusieurs couches débouchent d'une même face de détection permet de collecter la lumière de scintillation générée dans chaque guide de lumière avec un même photodétecteur pixelisé 30, couplé au système optique 35. Sur les figures 6B et 6C, seule une partie des guides de lumière a été représentée.

Quel que soit le mode de réalisation, lorsqu'un guide de lumière s'étend entre une extrémité couplée à un photodétecteur, et une extrémité non couplée à un photodétecteur, cette dernière peut être revêtue d'un matériau réfléchissant, de façon à renvoyer la lumière de scintillation vers l'extrémité du guide de lumière couplée au photodétecteur. Cela permet d'augmenter la quantité de lumière collectée par le photodétecteur, ce qui améliore la sensibilité de mesure.

La figure 7 illustre une variante pouvant être appliquée à l'ensemble des modes de réalisation décrits dans cette demande. Selon cette variante, un détecteur de rayonnement, dit détecteur auxiliaire 28, est inséré dans une couche 21, de préférence en étant introduit dans un canal 21_{c} formé entre deux guides de lumière 21_{g}. Il s'agit de préférence d'un détecteur ponctuel, permettant d'obtenir une valeur quantitative d'une dose, ou d'un débit de dose, générée par le faisceau d'irradiation Ω. Le détecteur auxiliaire 28 est de préférence un détecteur solide, de façon à être suffisamment compact pour pouvoir être inséré dans le canal, sachant que la largeur d'un canal est comprise entre quelques dizaines de microns et quelques centaines de µm, en étant et de préférence inférieure à 100 µm. Sur la figure 7, les canaux 21_{c} ont été représentés en étant élargis, par rapport aux guides de lumière 21_{g}, pour permettre la visualisation de l'insertion du détecteur auxiliaire 28 dans un canal 21_{c}. Le volume de détection du détecteur auxiliaire 28 est de préférence inférieur à 1 mm³, voire 0.1 mm³. Compte tenu des contraintes de compacité, il est préférable que le détecteur auxiliaire 28 soit un scintillateur, par exemple à base de GaN. La réponse d'un tel scintillateur est peu sensible à l'angle d'incidence du faisceau d'irradiation, ce qui le rend particulièrement adapté à la réalisation de mesures sous forte irradiation, lorsque l'axe Z_{Ω} du faisceau d'irradiation tourne autour du scintillateur. De plus, le faible volume de détection le rend particulièrement adapté à une insertion dans un canal étroit. Le détecteur auxiliaire est relié à une fibre optique 29, cette dernière s'étendant entre le détecteur auxiliaire et un circuit de lecture auxiliaire 29' distant du scintillateur multicouche. Le circuit de lecture auxiliaire permet d'obtenir une valeur quantitative d'exposition en fonction de la lumière transmise par la fibre optique 29.

D'autres matériaux scintillateurs peuvent être mis en oeuvre pour constituer le détecteur auxiliaire 28. On privilégiera les détecteurs compacts, faiblement rémanents, et compatibles avec des forts niveaux d'irradiation, et peu sensibles à l'incidence du faisceau d'irradiation. Parmi les autres matériaux scintillateurs pouvant former le détecteur auxiliaire, on peut citer, à titre non exhaustif, le BGO (germanate de bismuth), le Csl(TI) (iodure de césium dopé au thallium), le LSO (oxyorthosilicate de lutetium), le LYSO (cristal scintillant à base de lutetium dopé au cérium), GSO (orthosilicate de gadolinium), ou le LaBr₃ (bromure de lanthane).

Plusieurs détecteurs auxiliaires peuvent être ainsi disposés au sein d'une même couche, voire au sein de différentes couches. De préférence, au moins un détecteur auxiliaire est disposé au niveau de l'isocentre du faisceau d'irradiation Ω. On rappelle que dans le cas d'une radiothérapie stéréotaxique, l'isocentre correspond à l'intersection des axes d'irradiation Z_{Ω} successifs au cours de la rotation de la source d'irradiation.

Le détecteur auxiliaire 28 permet une estimation précise d'une dose au niveau d'un point. Cette information, précise mais ponctuelle, peut être avantageusement combinée avec l'estimation de la distribution spatiale du faisceau d'irradiation, dans le plan de détection, décrite par la suite. On combine alors une information spatiale avec une mesure quantitative ponctuelle.

Quel que soit le mode de réalisation, le scintillateur multicouche peut comporter des marques formant des points de repère, visibles par IRM. Ces marques peuvent être des symboles de type point, croix, ou trait, réalisés selon un matériau formant un agent de contraste en IRM, par exemple du gadolinium. On pourra ainsi délimiter un contour du scintillateur multicouche ou repérer des points remarquables, par exemple un centre du scintillateur dans le plan de détection P. Précisons que le scintillateur multicouche est de préférence amagnétique, ce qui le rend compatible avec une utilisation sous les forts champs magnétiques produits lors d'un examen par IRM.

Des essais expérimentaux ont été réalisés en mettant en oeuvre un scintillateur monocouche de section carrée, comportant une couche unique, similaire à la première couche 21 du scintillateur 20 décrite en lien avec les figures 2A et 2B. La couche 21 s'étend selon un axe d'orientation Δ₁. Elle est ainsi associée à un angle d'orientation θ₁ de 90° par rapport à l'axe X. Le scintillateur monocouche comporte 200 guides de lumières 21_{g} de hauteur 1 mm (selon l'axe Z), espacés les uns des autres selon une distance de 250 µm. Entre deux guides de lumière adjacents s'étend un canal 21_{c} de largeur 60 µm (selon l'axe X).

Afin de vérifier la capacité des guides de lumière à propager la lumière de scintillation, le scintillateur monocouche a tout d'abord été exposé à une irradiation UV (375 nm) perpendiculairement au plan XY. Le faisceau d'irradiation forme, dans le plan de détection, un rectangle de 8 mm (selon l'axe X) par 50 mm (selon l'axe Y). On a disposé, en regard de la face du scintillateur, s'étendant selon un plan XZ, un système optique 35 et un photodétecteur 30 de type capteur CMOS (Caméra CMOS Andor Zyla 5.5 optiquement couplée à un zoom Macro Navitar 7000). La face du scintillateur, dont on forme une image par le capteur CMOS, est désignée par le terme "face de détection".

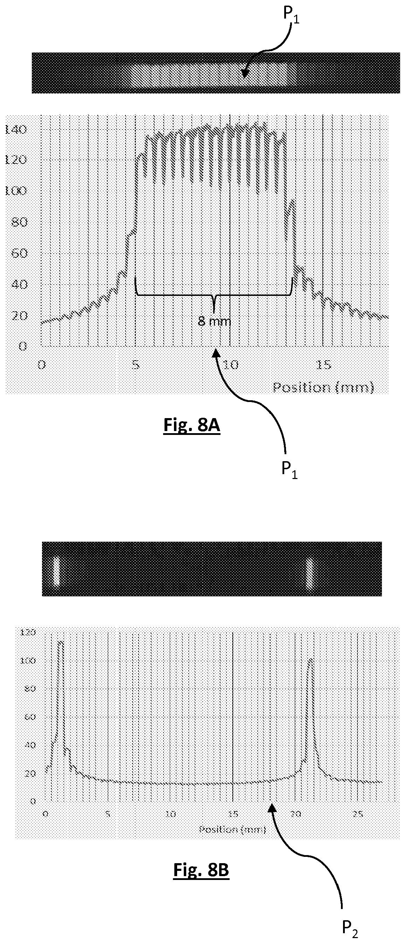

La figure 8A représente une image de la face de détection, acquise par le capteur CMOS. On a également ajouté un profil d'intensité P₁ de cette image. Le profil d'intensité permet de remonter à une dimension du faisceau d'irradiation perpendiculairement à l'axe d'orientation Δ₁ de la première couche 21. Ce dernier étant confondu avec l'axe Y, le profil permet de remonter à une dimension du faisceau d'irradiation selon l'axe X, à savoir 8 mm. Le profil obtenu est ainsi représentatif d'une projection du faisceau d'irradiation selon l'orientation θ₁.

Durant un deuxième essai expérimental, l'irradiation UV était formée de deux faisceaux de largeur 200 µm (selon l'axe X) et de longueurs respectives (selon l'axe Y) égales à 47.5 mm et 40 mm. La figure 8B représente une image de la face de détection F1, acquise par le photodétecteur matriciel. On a également ajouté un profil d'intensité P₂ de cette image. Le profil permet d'apprécier la résolution spatiale du scintillateur. Cette figure atteste de la bonne résolution spatiale permise par la structuration de la couche en guides de lumière. L'intensité du signal émanant d'un guide lumière correspond à l'exposition auquel est soumis le guide lumière, selon toute la longueur du guide exposée à l'irradiation. La différence d'amplitude des deux pics est attribuée à la longueur différente des faisceaux selon l'axe Y.

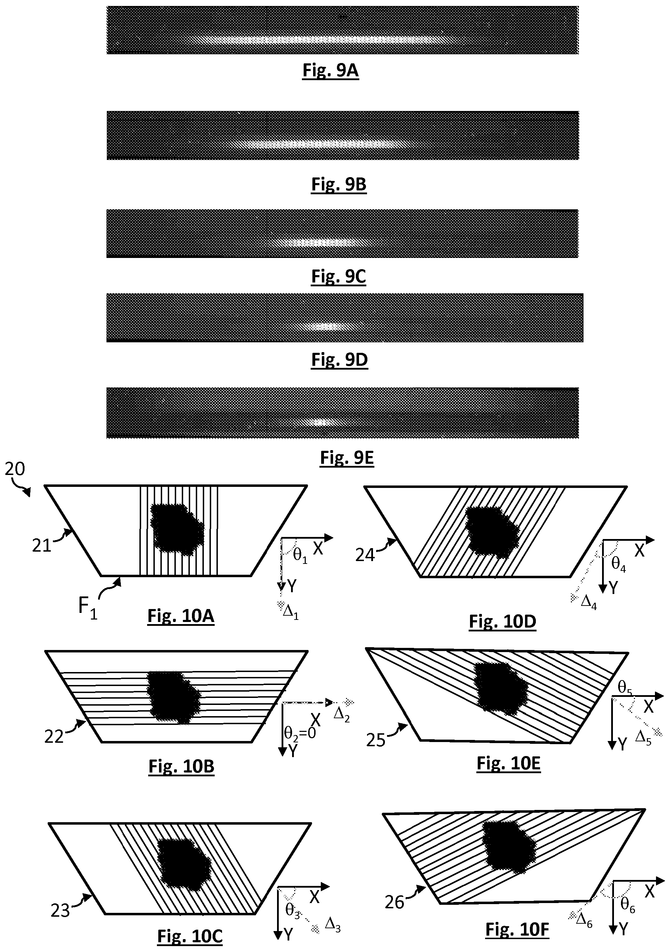

Durant une autre série d'essais, le scintillateur monocouche a été exposé à un faisceau d'irradiation Ω de photons X issu d'un accélérateur porté au potentiel 6 MV, le débit de dose s'élevant à 14 Gy/minute. La longueur du faisceau, selon l'axe Y, s'élevait à 10 cm. La largeur du faisceau, selon l'axe X, a été successivement fixée à 3 cm, 2 cm, 1 cm, 0.5 cm et 0.1 cm. Les figures 9A, 9B, 9C, 9D et 9E représentent les images obtenues par les guides d'onde émanant de la face de détection du scintillateur monocouche, respectivement pour les largeurs 3 cm, 2 cm, 1 cm, 0.5 cm et 0.1 cm. Chaque image a été acquise selon une durée de 10 ms, correspondant à quelques impulsions de l'accélérateur de particules. Ces images attestent de la capacité d'une couche du scintillateur à permettre d'estimer une dimension du champ d'irradiation selon une direction perpendiculaire à l'orientation associée à la couche. Elles représentent respectivement une projection du faisceau d'irradiation Ω selon l'orientation associée à chaque couche. Ces images montrent également que la structuration de la couche en guides d'onde permet de mesurer une dimension de faisceaux d'irradiation de faible largeur, par exemple 0.1 cm.

Durant une autre série d'essais, on a simulé l'utilisation d'un scintillateur de section trapézoïdale, similaire à l'exemple décrit en lien avec la figure 5A. Selon cette configuration, le scintillateur comporte six couches 21, 22, 23, 24, 25, 26, chaque couche s'étendant respectivement selon un axe d'orientation Δ₁, Δ₂, Δ₃, Δ₄, Δ₅, Δ₆. Chaque couche est ainsi respectivement associée à un angle d'orientation θ₁, θ₂, θ₃, θ₄, θ₅, θ₆, chaque angle d'orientation étant différent l'un de l'autre. Chaque couche est respectivement schématisée sur les figures 10A à 10F. Chaque guide de lumière a une hauteur de 500 µm (selon l'axe Z), et une largeur égale à 250 µm, perpendiculairement à l'axe d'orientation selon lequel s'étend le guide de lumière. Deux guides de lumière adjacents sont espacés d'un canal d'épaisseur 60 µm. Chaque couche comporte 215 guides de lumière. L'épaisseur du scintillateur multicouche 20, perpendiculairement au plan de détection XY, est de 3 mm. La grande longueur peut être de l'ordre de 100 mm et une petite longueur de peut être de l'ordre de 75 mm.

Sur les figures 10A à 10F a également été représentée une forme d'un faisceau d'irradiation Ω, dans la partie centrale de chaque couche. Sur les figures 8A et 8B, ainsi que les figures 9A à 9E, on a observé que la lumière émanant des guides de lumière d'une couche permet d'obtenir une projection du faisceau d'irradiation selon l'orientation de la couche. En multipliant le nombre de couches, cette propriété peut être mise à profit pour réaliser une tomographie du faisceau d'irradiation Ω dans le plan de détection, en considérant que chaque couche s'étend selon un même plan de détection. Pour cela, l'épaisseur ε du scintillateur multicouche est négligée. Il est préférable que le nombre de couches soit compris entre 3 et 20. Cela permet d'obtenir un nombre suffisant de projections, tout en conservant une épaisseur raisonnable du scintillateur multicouche.

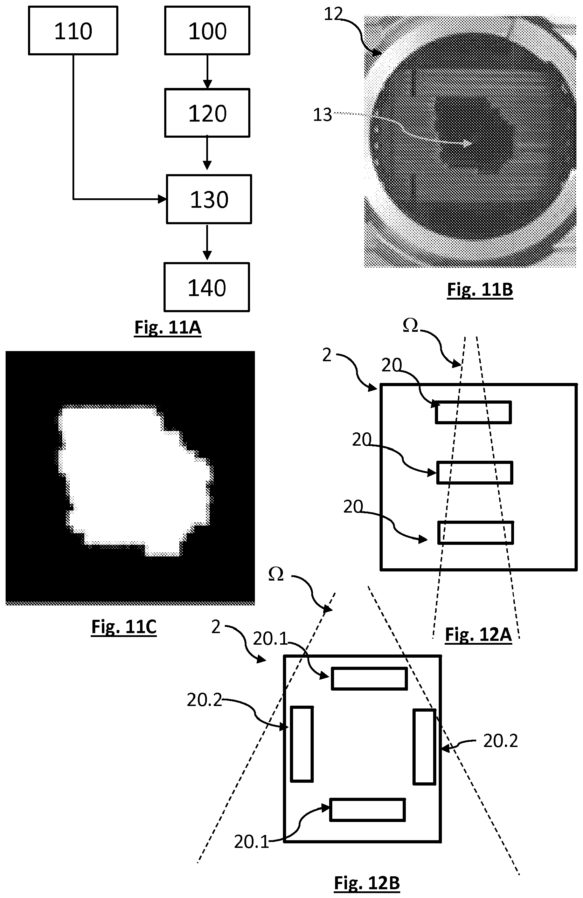

La figure 11A représente les principales étapes d'un procédé de tomographie mettant en oeuvre le scintillateur multicouche.

Etape 100 : disposition du scintillateur multicouche 20 dans un faisceau d'irradiation Ω, le scintillateur s'étendant dans un plan de détection P. Dans cet exemple, le plan de détection P est orthogonal à l'axe du faisceau d'irradiation P_{Ω}, mais cette condition n'est pas nécessaire.

Etape 110 : paramétrage de la tomographie. Il s'agit d'effectuer une modélisation de façon à obtenir une matrice de transfert M. Le plan de détection est discrétisé en plusieurs mailles élémentaires et on calcule une matrice de transfert, dont chaque terme M(i,j) correspond à une contribution à l'intensité lumineuse mesurée en sortie d'un guide de lumière i du scintillateur lorsqu'une maille j est exposée à un niveau d'irradiation donné. L'établissement d'une telle matrice de transfert est une étape classique en tomographie. La dimension de la matrice est I x J, ou I désigne le nombre de guides d'onde et J désigne le nombre de mailles.

Etape 120 : acquisition, par un ou plusieurs photodétecteurs pixelisés, d'images représentatives de la quantité de lumière émanant des guides de lumière respectivement ménagés dans chaque couche de détection. On obtient alors une projection du faisceau d'irradiation selon l'orientation respectivement associée à chaque couche. Lorsqu'on dispose d'un nombre suffisant de pixels, par exemple en utilisant un imageur, l'acquisition des images peut être simultanée, de façon à obtenir une information quant à l'étendue et l'intensité du faisceau d'irradiation. La quantité de chaque signal peut former un vecteur de mesure V, dont chaque terme V(i) est représentatif d'une quantité de signal collectée par chaque vecteur. La dimension I du vecteur de mesure correspond aux nombres de guides d'onde pris en compte.

Etape 130 : inversion. Il s'agit de déterminer un vecteur d'irradiation W, dont chaque terme W(j) correspond à une quantité d'irradiation détectée dans une maille j. La dimension du vecteur d'irradiation correspond aux nombres J de mailles prises en compte. Le vecteur de mesure V, la matrice de transfert M et le vecteur d'irradiation sont reliés par l'équation : V = M x W. L'inversion permet une estimation du vecteur W satisfaisant le mieux à cette relation. Elle est réalisée selon différentes méthodes connues de l'homme du métier.

Etape 140 : obtention d'une distribution spatiale bidimensionnelle du faisceau d'irradiation Ω, à partir du vecteur d'irradiation W estimé lors de l'étape précédente.

Un autre exemple d'algorithme de tomographie est également décrit dans la publication Goulet M. "High resolution 2D measurement device based on a few long scintillating fibers and tomographic reconstruction", citée dans l'art antérieur.

La figure 11B représente une ouverture 13 pratiquée dans un collimateur à lames 12 tel que précédemment décrit. On a mis en œuvre l'algorithme résumé en lien avec la figure 11A, sur la base de simulations réalisées en utilisant le scintillateur à six couches représenté sur les figures 10A à 10F. On a obtenu une distribution spatiale bidimensionnelle du faisceau d'irradiation telle que représentée sur la figure 11C. Le résultat obtenu (figure 11C) est cohérent avec l'ouverture réalisée dans le collimateur (figure 11B).

Lorsque le scintillateur multicouche comporte un détecteur auxiliaire, ce dernier peut être utilisé pour effectuer un recalage de la distribution spatiale bidimensionnelle obtenue à partir d'une valeur d'exposition mesurée par le détecteur auxiliaire. On combine alors une information spatiale avec une ou plusieurs mesures quantitatives ponctuelles.

Le scintillateur multicouche 20 décrit ci-avant pourra être utilisé pour la prévision de la dosimétrie préalablement à des interventions de radiothérapie, en particulier en radiothérapie stéréotaxique. On pourra par exemple disposer plusieurs scintillateurs multicouche 20, parallèlement les uns des autres, dans un fantôme 2, comme représenté sur la figure 12A. Cela permet d'obtenir l'étendue d'un faisceau d'irradiation selon différents plans, à différentes distances de la source d'irradiation 11. Cela permet d'établir une évolution, selon l'axe du faisceau d'irradiation, de la distribution spatiale bidimensionnelle du faisceau d'irradiation Ω.

Il est également possible d'envisager de disposer différents scintillateurs multicouches respectivement dans différents plans, de façon à obtenir une distribution spatiale bidimensionnelle du faisceau d'irradiation respectivement dans les différents plans. La figure 12B représente plusieurs scintillateurs multicouches s'étendant dans un fantôme selon différentes orientations. Deux scintillateurs 20.1 sont disposés de telle sorte que le plan de détection est orthogonal à l'axe du faisceau d'irradiation Ω, tandis que deux autres scintillateurs 20.2 sont disposés de telle sorte que leur plan de détection est parallèle à l'axe du faisceau d'irradiation Ω.

Quelle que soit la disposition du ou des scintillateurs multicouches, le fantôme 2 peut comprendre un détecteur ponctuel, par exemple un scintillateur GaN de faible volume, typiquement inférieur à 1 mm³, au niveau de l'isocentre.

## Revendications

1. Détecteur scintillateur multicouche (20), comportant au moins trois couches (21, 22, 23, 24, 25, 26) superposées les unes aux autres, et s'étendant chacune parallèlement à un plan (P), dit plan de détection, le détecteur étant tel que :
- chaque couche comporte un premier matériau, dit matériau scintillateur, apte à interagir avec un rayonnement ionisant et à former, suite à l'interaction, une lumière de scintillation;
- chaque couche comporte une pluralité de guides de lumière (21_{g}, 22_{g}, 23_{g}, 24_{g}, 25_{g}, 26_{g}), s'étendant respectivement parallèlement au plan de détection, selon une longueur, les guides de lumière comprenant le matériau scintillateur et étant disposés, sur tout ou partie de leur longueur, parallèlement à un axe d'orientation (Δ₁, Δ₂, Δ₃, Δ₄, Δ₅, Δ₆);
- l'axe d'orientation des guides de lumière d'une même couche est orienté, dans le plan de détection, selon une orientation (θ₁, θ₂, θ₃, θ₄, θ₅, θ₆), de telle sorte qu'à chaque couche (21, 22, 23, 24, 25, 26) est associée une orientation, les orientations des axes d'orientation respectifs d'au moins trois couches étant différentes les unes des autres ;
- le matériau scintillateur présente un premier indice de réfraction (n₁);
le détecteur étant **caractérisé en ce que** chaque couche est formée d'une plaque, comportant le matériau scintillateur, s'étendant parallèlement au plan de détection, et telle que :
- la plaque comporte des canaux (21_{c}, 22_{c}, 23_{c}, 24_{c}, 25_{c}, 26_{c}), ménagés dans la plaque, et s'étendant parallèlement au plan de détection, selon l'orientation associée à la couche;
- chaque canal est comblé par un deuxième matériau, d'un deuxième indice de réfraction (n₂), inférieur au premier indice de réfraction ;
- de telle sorte qu'entre deux canaux adjacents s'étende un guide de lumière (21_{g}, 22_{g}, 23_{g}, 24_{g}, 25_{g}, 26_{g}), formé du matériau scintillateur, et apte à générer une lumière de scintillation sous l'effet d'une irradiation par le rayonnement ionisant, et à propager la lumière de scintillation selon l'axe d'orientation de la couche.

2. Détecteur (20) selon la revendication 1, dans lequel chaque guide de lumière d'une même couche s'étend, selon le plan de détection (P), jusqu'à une face du détecteur (20), dite face de détection (F₁, F₂, F₃, F₄, F₅), la face de détection étant disposée transversalement au plan de détection (P), et de préférence perpendiculairement à ce dernier, de telle sorte que la lumière de scintillation générée dans le guide de lumière est propagée vers la face de détection.

3. Détecteur (20) selon l'une quelconque des revendications 1 ou 2, comportant plusieurs faces de détection (F₁, F₂, F₃, F₄, F₅), chaque face de détection comportant des extrémités de guides de lumière formés dans une même couche.

4. Détecteur (20) selon l'une quelconque des revendications 1 ou 2, dans lequel au moins une face de détection comporte des extrémités de guides de lumière formés dans différentes couches.

5. Détecteur (20) selon l'une quelconque des revendications précédentes, présentant, dans le plan de détection, une section polygonale.

6. Détecteur (20) selon l'une quelconque des revendications précédentes, dans lequel la hauteur d'au moins un guide de lumière (21_{g}, 22_{g}, 23_{g}, 24_{g}, 25_{g}, 26_{g}), perpendiculairement au plan de détection (P), est comprise entre 100 µm et 1 mm.

7. Détecteur (20) selon l'une quelconque des revendications précédentes, dans lequel la largeur d'un guide de lumière (21_{g}, 22_{g}, 23_{g}, 24_{g}, 25_{g}, 26_{g}), dans le plan de détection, perpendiculairement à l'axe d'orientation (Δ₁, Δ₂, Δ₃, Δ₄, Δ₅, A₆) selon lequel le guide de lumière s'étend, est comprise entre 100 µm et 500 µm.

8. Détecteur (20) selon l'une quelconque des revendications précédentes, dans lequel le deuxième matériau est de l'air.

9. Détecteur (20) selon l'une quelconque des revendications précédentes, dans lequel le premier matériau est un scintillateur organique.

10. Détecteur (20) selon l'une quelconque des revendications précédentes, dans lequel au moins une couche est séparée d'une autre couche qui lui est superposée par une épaisseur d'un troisième matériau, d'un troisième indice optique (n₃), inférieur au premier indice optique (n₁) et/ou opaque et/ou réfléchissant.

11. Détecteur (20) selon l'une quelconque des revendications précédentes, dans lequel au moins une couche comporte un détecteur (28) dit auxiliaire, disposé dans un canal, dit canal de mesure, le détecteur auxiliaire étant apte à induire un signal optique ou électronique lorsqu'il est exposé au rayonnement ionisant.

12. Détecteur (20) selon la revendication 11, dans lequel le détecteur auxiliaire (28) est formé par un matériau solide, relié à une connexion optique ou électrique (29), la connexion s'étendant dans le canal de mesure.

13. Détecteur (20) selon la revendication 12, dans lequel le détecteur auxiliaire (28) est un détecteur ponctuel, le détecteur auxiliaire présentant un volume de détection inférieur à 1 mm³ et de préférence inférieur ou égal à 0.5 mm³.

14. Détecteur (20) selon l'une quelconque des revendications 12 ou 13, dans lequel le détecteur auxiliaire (28) est un détecteur scintillateur, notamment en Nitrure de Gallium (GaN), relié à une fibre optique, cette dernière formant la connexion optique (29).

15. Détecteur (20) selon l'une quelconque des revendications précédentes, dans lequel le détecteur comporte des marques, formées sur au moins une couche, à l'aide d'un matériau formant un agent de contraste lors d'un examen par Imagerie à Résonance Magnétique, de telle sorte que les marques forment des points de repère visibles lorsque le détecteur est examiné par Imagerie à Résonance Magnétique.

16. Dispositif de détection (1) d'un rayonnement ionisant, comportant :
- un détecteur scintillateur multicouche (20) selon l'une quelconque des revendications 1 à 15, le détecteur scintillateur multicouche étant formé dans un matériau scintillateur apte à générer une lumière de scintillation lorsqu'il est exposé au rayonnement ionisant;
- au moins un photodétecteur pixelisé (30), comportant plusieurs pixels ;
- de telle sorte que chaque pixel est configuré pour être optiquement couplé à un guide de lumière (21_{g}, 22_{g}, 23_{g}, 24_{g}, 25_{g}, 26_{g}) ménagé dans une couche (21, 22, 23, 24, 25, 26) du détecteur scintillateur multicouche, de façon à collecter la lumière de scintillation émanant du guide de lumière auquel il est couplé.

17. Dispositif de détection (1) selon la revendication 16, comportant au moins un système optique de couplage (35), de telle sorte que chaque pixel est optiquement couplé à un guide de lumière par le système optique de couplage.

18. Dispositif de détection selon l'une quelconque des revendications 16 à 17, dans lequel au moins une couche du détecteur scintillateur multicouche comporte un détecteur auxiliaire (28), disposé dans un canal, dit canal de mesure, le détecteur auxiliaire étant apte à induire un signal optique ou électronique lorsqu'il est exposé au rayonnement ionisant, le dispositif de détection comportant une unité de mesure (29'), reliée au détecteur auxiliaire, et configurée pour mesurer un niveau d'irradiation détecté par le détecteur auxiliaire.

19. Dispositif selon la revendication 18, dans lequel le détecteur auxiliaire (28) est un scintillateur de type GaN, relié à une fibre optique (29), la fibre optique s'étendant dans le canal de mesure.

20. Procédé de reconstruction d'une distribution spatiale bidimensionnelle d'un faisceau d'irradiation (Ω) émis par une source d'irradiation (11), à l'aide du dispositif de détection (1) selon l'une quelconque des revendications 16 à 19, le procédé comportant les étapes suivantes:
a) irradiation du détecteur scintillateur multicouche (20), du dispositif de détection (1), par la source d'irradiation (11), le détecteur scintillateur multicouche (20) s'étendant selon un plan de détection (P), la source d'irradiation produisant un faisceau d'irradiation se propageant à travers le plan de détection ;
b) détection, par des pixels du dispositif de détection (1), d'une quantité de lumière de scintillation émanant de chaque couche du détecteur scintillateur multicouche, de façon à obtenir, pour chaque couche, une projection du faisceau d'irradiation, dans le plan de détection, selon l'orientation des guides de lumière de chaque couche ;
c) à partir de chaque projection obtenue selon l'étape b), estimation d'une distribution spatiale bidimensionnelle du faisceau l'irradiation selon le plan de détection (P).

21. Procédé selon la revendication 20, dans lequel :
- le détecteur scintillateur multicouche comporte un détecteur auxiliaire (28), disposé dans un canal, dit canal de mesure, le détecteur auxiliaire étant apte à induire un signal optique ou électronique lorsqu'il est exposé au rayonnement ionisant ;
- le dispositif de détection comportant une unité de mesure (29'), reliée au détecteur auxiliaire, et configurée pour mesurer un niveau d'irradiation détecté par le détecteur auxiliaire ;
le procédé comportant une étape d) de recalage de la distribution spatiale bidimensionnelle estimée lors de l'étape c) à partir du niveau d'irradiation détecté par le détecteur auxiliaire.

22. Procédé selon la revendication 20 ou la revendication 21, dans lequel les étapes a) à c) sont effectuées en disposant un détecteur scintillateur multicouche (20) à différentes distances de la source d'irradiation, de façon à obtenir, pour chaque distance, une distribution spatiale bidimensionnelle du faisceau d'irradiation.

## Patentansprüche

1. Mehrschichtiger Szintillationsdetektor (20) aufweisend mindestens drei Schichten (21, 22, 23, 24, 25, 26), die übereinander gelagert sind und sich jeweils parallel zu einer Detektionsebene (P) erstrecken, wobei der Detektor so beschaffen ist, dass:
- jede Schicht ein erstes Szintillationsmaterial aufweist, das geeignet ist, mit einer ionisierenden Strahlung in Wechselwirkung zu treten und nach der Wechselwirkung ein Szintillationslicht zu bilden;
- jede Schicht eine Mehrzahl von Lichtleitern (21_{g}, 22_{g}, 23_{g}, 24_{g}, 25_{g}, 26_{g}) aufweist, die sich jeweils einer Länge nach parallel zur Detektionsebene erstrecken, wobei die Lichtleiter das Szintillationsmaterial umfassen und über ihre gesamte Länge oder einen Teil davon parallel zu einer Orientierungsachse (Δ₁, Δ₂, Δ₃, Δ₄, Δ₅, Δ₆) angeordnet sind;
- wobei die Orientierungsachse der Lichtleiter einer selben Schicht in der Detektionsebene gemäß einer Orientierung (θ₁, θ₂, θ₃, θ₄, θ₆) so orientiert ist, dass jeder Schicht (21, 22, 23, 24, 25, 26) eine Orientierung zugeordnet ist, wobei die Orientierungen der jeweiligen Orientierungsachsen von mindestens drei Schichten voneinander verschieden sind;
- das Szintillationsmaterial einen ersten Brechungsindex (n₁) aufweist;
wobei der Detektor **dadurch gekennzeichnet ist, dass** jede Schicht von einer Platte gebildet ist, die das Szintillationsmaterial aufweist, die sich parallel zur Detektionsebene erstreckt, und so dass:
- die Platte Kanäle (21_{c}, 22_{c}, 23_{c}, 24_{c}, 25_{c}, 26_{c}) aufweist, die in der Platte angeordnet sind und sich gemäß der Orientierung, die der Schicht zugeordnet ist, parallel zur Detektionsebene erstrecken;
- jeder Kanal von einem zweiten Material mit einem zweiten Brechungsindex (n₂) unter dem ersten Brechungsindex ausgefüllt ist;
- so dass sich zwischen zwei benachbarten Kanälen ein Lichtleiter (21_{g}, 22_{g}, 23_{g}, 24_{g}, 25_{g}, 26_{g}) erstreckt, der von Szintillationsmaterial gebildet und geeignet ist, unter der Wirkung einer Bestrahlung mit der ionisierenden Strahlung ein Szintillationslicht zu erzeugen und das Szintillationslicht entlang der Orientierungsachse der Schicht zu auszubreiten.

2. Detektor (20) nach Anspruch 1, wobei sich jeder Lichtleiter einer selben Schicht entlang der Detektionsebene (P) bis zu einer Detektionsfläche (F₁, F₂, F₃, F₄, Fs) des Detektors (20) erstreckt, wobei die Detektionsfläche quer zur Detektionsebene (P) und vorzugsweise senkrecht zu letzterer angeordnet ist, so dass das Szintillationslicht, das im Lichtleiter erzeugt wird, zur Detektionsfläche hin ausgebreitet wird.

3. Detektor (20) nach einem der Ansprüche 1 oder 2, aufweisend mehrere Detektionsflächen (F₁, F₂, F₃, F₄, Fs), wobei jede Detektionsfläche Lichtleiterenden aufweist, die in einer selben Schicht ausgebildet sind.

4. Detektor (20) nach einem der Ansprüche 1 oder 2, wobei mindestens eine Detektionsfläche Lichtleiterenden aufweist, die in verschiedenen Schichten ausgebildet sind.

5. Detektor (20) nach einem der vorhergehenden Ansprüche, der einen polygonalen Querschnitt in der Detektionsebene aufweist.

6. Detektor (20) nach einem der vorhergehenden Ansprüche, wobei die Höhe mindestens eines Lichtleiters (21_{g}, 22_{g}, 23_{g}, 24_{g}, 25_{g}, 26_{g}) senkrecht zur Detektionsebene (P) zwischen 100 µm und 1 mm beträgt.

7. Detektor (20) nach einem der vorhergehenden Ansprüche, wobei die Breite eines Lichtleiters (21_{g}, 22_{g}, 23_{g}, 24_{g}, 25_{g}, 26_{g}) in der Detektionsebene senkrecht zur Orientierungsachse (Δ₁, Δ₂, Δ₃, Δ₄, Δ₅, Δ₆), entlang welcher sich der Lichtleiter erstreckt, zwischen 100 µm und 500 µm beträgt.

8. Detektor (20) nach einem der vorhergehenden Ansprüche, wobei das zweite Material Luft ist.

9. Detektor (20) nach einem der vorhergehenden Ansprüche, wobei das erste Material ein organischer Szintillator ist.

10. Detektor (20) nach einem der vorhergehenden Ansprüche, wobei mindestens eine Schicht von einer anderen Schicht, die über ihr gelagert ist, durch eine Dicke eines dritten Materials getrennt ist, das einen dritten optischen Index (n₃) unter dem ersten optischen Index (n₁) aufweist und/oder opak und/oder reflektierend ist.

11. Detektor (20) nach einem der vorhergehenden Ansprüche, wobei mindestens eine Schicht einen Hilfsdetektor (28) aufweist, der in einem Messkanal angeordnet ist, wobei der Hilfsdetektor geeignet ist, ein optisches oder elektronisches Signal zu induzieren, wenn er der ionisierenden Strahlung ausgesetzt ist.

12. Detektor (20) nach Anspruch 11, wobei der Hilfsdetektor (28) von einem Feststoff gebildet ist, der mit einer optischen oder elektrischen Verbindung (29) verbunden ist, wobei sich die Verbindung im Messkanal erstreckt.

13. Detektor (20) nach Anspruch 12, wobei der Hilfsdetektor (28) ein Punktdetektor ist, wobei der Hilfsdetektor ein Detektionsvolumen unter 1 mm³ und vorzugsweise kleiner als oder gleich 0,5 mm³ aufweist.

14. Detektor (20) nach einem der Ansprüche 12 oder 13, wobei der Hilfsdetektor (28) ein Szintillationsdetektor ist, insbesondere aus Galliumnitrid (GaN), der mit einer optischen Faser verbunden ist, wobei letztere die optische Verbindung (29) bildet.

15. Detektor (20) nach einem der vorhergehenden Ansprüche, wobei der Detektor Markierungen aufweist, die mithilfe eines Materials, das ein Kontrastmittel bei einer Untersuchung mittels Magnetresonanzbildgebung bildet, auf mindestens einer Schicht derart ausgebildet sind, dass die Markierungen Bezugspunkte bilden, die sichtbar sind, wenn der Detektor mittels Magnetresonanzbildgebung untersucht wird.

16. Vorrichtung zur Detektion (1) einer ionisierenden Strahlung, aufweisend:
- einen mehrschichtigen Szintillationsdetektor (20) nach einem der Ansprüche 1 bis 15, wobei der mehrschichtige Szintillationsdetektor in einem Szintillationsmaterial gebildet ist, das geeignet ist, ein Szintillationslicht zu erzeugen, wenn es der ionisierenden Strahlung ausgesetzt ist;
- mindestens einen pixelisierten Photodetektor (30), der mehrere Pixel aufweist;
- so dass jeder Pixel dazu ausgebildet ist, an einen Lichtleiter (21_{g}, 22_{g}, 23_{g}, 24_{g}, 25_{g}, 26_{g}) optisch gekoppelt zu sein, der in einer Schicht (21, 22, 23, 24, 25, 26) des mehrschichtigen Szintillationsdetektors angeordnet ist, um das Szintillationslicht einzufangen, das von dem Lichtleiter ausgeht, an den er gekoppelt ist.

17. Detektionsvorrichtung (1) nach Anspruch 16, aufweisend mindestens ein optisches Kopplungssystem (35), so dass jeder Pixel durch das optische Kopplungssystem optisch an einen Lichtleiter gekoppelt ist.

18. Detektionsvorrichtung nach einem der Ansprüche 16 bis 17, wobei mindestens eine Schicht des mehrschichtigen Szintillationsdetektors einen Hilfsdetektor (28) aufweist, der in einem Messkanal angeordnet ist, wobei der Hilfsdetektor geeignet ist, ein optisches oder elektronisches Signal zu induzieren, wenn er der ionisierenden Strahlung ausgesetzt ist, wobei die Detektionsvorrichtung eine Messeinheit (29') aufweist, die mit dem Hilfsdetektor verbunden ist und dazu ausgebildet ist, ein Bestrahlungsniveau zu messen, das vom Hilfsdetektor detektiert wird.

19. Vorrichtung nach Anspruch 18, wobei der Hilfsdetektor (28) ein GaN-Szintillator ist, der mit einer optischen Faser (29) verbunden ist, wobei sich die optische Faser im Messkanal erstreckt.

20. Verfahren zur Rekonstruktion einer zweidimensionalen räumlichen Verteilung eines Strahlenbündels (Ω), das von einer Bestrahlungsquelle (11) abgegeben wird, mithilfe der Detektionsvorrichtung (1) nach einem der Ansprüche 16 bis 19, wobei das Verfahren die folgenden Schritte aufweist:
a) Bestrahlen des mehrschichtigen Szintillationsdetektors (20) der Detektionsvorrichtung (1) durch die Bestrahlungsquelle (11), wobei sich der mehrschichtige Szintillationsdetektor (20) entlang einer Detektionsebene (P) erstreckt, wobei die Bestrahlungsquelle ein Strahlenbündel erzeugt, das sich quer durch die Detektionsebene ausbreitet;
b) Detektieren, durch Pixel der Detektionsvorrichtung (1), einer Szintillationslichtmenge, die von jeder Schicht des mehrschichtigen Szintillationsdetektors ausgeht, um für jede Schicht eine Projektion des Strahlenbündels in der Detektionsebene gemäß der Orientierung der Lichtleiter jeder Schicht zu erhalten;
c) ausgehend von jeder Projektion, die gemäß Schritt b) erhalten wird, Schätzen einer zweidimensionalen räumlichen Verteilung des Strahlenbündels entlang der Detektionsebene (P).

21. Verfahren nach Anspruch 20, wobei:
- der mehrschichtige Szintillationsdetektor einen Hilfsdetektor (28) aufweist, der in einem Messkanal angeordnet ist, wobei der Hilfsdetektor geeignet ist, ein optisches oder elektronisches Signal zu induzieren, wenn er der ionisierenden Strahlung ausgesetzt ist;
- wobei die Detektionsvorrichtung eine Messeinheit (29') aufweist, die mit dem Hilfsdetektor verbunden ist und dazu ausgebildet ist, ein Bestrahlungsniveau zu messen, das vom Hilfsdetektor detektiert wird;
wobei das Verfahren einen Schritt d) des Neueinstellens der zweidimensionalen räumlichen Verteilung, die beim Schritt c) geschätzt wurde, ausgehend von dem Bestrahlungsniveau, das vom Hilfsdetektor detektiert wird, aufweist.

22. Verfahren nach Anspruch 20 oder 21, wobei die Schritte a) und c) durchführt werden, indem ein mehrschichtiger Szintillationsdetektor (20) in verschiedenen Abständen zu der Bestrahlungsquelle angeordnet wird, um für jeden Abstand eine zweidimensionale räumliche Verteilung des Strahlenbündels zu erhalten.

## Claims

1. Multilayer scintillation detector (20), comprising at least three layers (21, 22, 23, 24, 25, 26) superposed on top of one another, and each extending parallel to a plane (P), called detection plane, the detector being such that:
- each layer comprises a first material, called scintillation material, that can interact with an ionizing radiation and form, following the interaction, a scintillation light;
- each layer comprises a plurality of light guides (21_{g}, 22_{g}, 23_{g}, 24_{g}, 25_{g}, 26_{g}), respectively extending parallel to the detection plane, according to a length, the light guides comprising the scintillation material and being disposed, over all or part of their length, parallel to an axis of orientation (Δ₁, Δ₂, Δ₃, Δ₄, Δ₅, Δ₆);
- the axis of orientation of the light guides of one and the same layer is oriented, in the detection plane, according to an orientation (θ₁, θ₂, θ₃, θ₄, θ₅, θ₆), such that each layer (21, 22, 23, 24, 25, 26) has an associated orientation, the orientations of the respective axes of orientation of at least three layers being different from one another;
- the scintillation material has a first refractive index (n₁);
the detector being **characterized in that** each layer is formed by a plate, comprising the scintillation material, extending parallel to the detection plane, and such that:
- the plate comprises channels (21_{c}, 22_{c}, 23_{c}, 24_{c}, 25_{c}, 26_{c}), formed in the plate, and extending parallel to the detection plane, according to the orientation associated with the layer;
- each channel is filled by a second material, of a second refractive index (n₂), lower than the first refractive index;
- such that, between two adjacent channels, there extends a light guide (21_{g}, 22_{g}, 23_{g}, 24_{g}, 25_{g}, 26_{g}), formed by the scintillation material, and capable of generating a scintillation light under the effect of an irradiation by the ionizing radiation, and of propagating the scintillation light according to the axis of orientation of the layer.

2. Detector (20) according to Claim 1, wherein each light guide of one and the same layer extends, according to the detection plane (P), to a face of the detector (20), called detection face (F₁, F₂, F₃, F₄, Fs), the detection face being disposed transversely to the detection plane (P), and preferably at right angles thereto, such that the scintillation light generated in the light guide is propagated toward the detection face.

3. Detector (20) according to either one of Claims 1 and 2, comprising several detection faces (F₁, F₂, F₃, F₄, Fs), each detection face comprising ends of light guides formed in one and the same layer.

4. Detector (20) according to either one of Claims 1 and 2, wherein at least one detection face comprises ends of light guides formed in different layers.

5. Detector (20) according to any one of the preceding claims, having, in the detection plane, a polygonal section.

6. Detector (20) according to any one of the preceding claims, wherein the height of at least one light guide (21_{g}, 22_{g}, 23_{g}, 24_{g}, 25_{g}, 26_{g}), at right angles to the detection plane (P), lies between 100 µm and 1 mm.

7. Detector (20) according to any one of the preceding claims, wherein the width of a light guide (21_{g}, 22_{g}, 23_{g}, 24_{g}, 25_{g}, 26_{g}), in the detection plane, at right angles to the axis of orientation (Δ₁, Δ₂, Δ₃, Δ₄, Δ₅, Δ₆) according to which the light guide extends, lies between 100 µm and 500 µm.

8. Detector (20) according to any one of the preceding claims, wherein the second material is air.

9. Detector (20) according to any one of the preceding claims, wherein the first material is an organic scintillator.

10. Detector (20) according to any one of the preceding claims, wherein at least one layer is separated from another layer which is superposed on it by a thickness of a third material, of a third optical index (n₃), lower than the first optical index (n₁) and/or opaque and/or reflecting.

11. Detector (20) according to any one of the preceding claims, wherein at least one layer comprises a so-called auxiliary detector (28), disposed in a channel, called measurement channel, the auxiliary detector being able to induce an optical or electronic signal when it is exposed to the ionizing radiation.

12. Detector (20) according to Claim 11, wherein the auxiliary detector (28) is formed by a solid material, linked to an optical or electrical connection (29), the connection extending in the measurement channel.

13. Detector (20) according to Claim 12, wherein the auxiliary detector (28) is a point detector, the auxiliary detector having a detection volume less than 1 mm³ and preferably less than or equal to 0.5 mm³.

14. Detector (20) according to either one of Claims 12 and 13, wherein the auxiliary detector (28) is a scintillation detector, notably made of gallium nitride (GaN), linked to an optical fiber, the latter forming the optical connection (29).

15. Detector (20) according to any one of the preceding claims, wherein the detector comprises marks, formed on at least one layer, using a material forming a contrast agent in an examination by magnetic resonance imaging, such that the marks form reference points that are visible when the detector is examined by magnetic resonance imaging.

16. Device (1) for detecting an ionizing radiation, comprising:
- a multilayer scintillation detector (20) according to any one of Claims 1 to 15, the multilayer scintillation detector being formed in a scintillation material capable of generating a scintillation light when it is exposed to the ionizing radiation;
- at least one pixelated photodetector (30), comprising several pixels;
- such that each pixel is configured to be optically coupled to a light guide (21_{g}, 22_{g}, 23_{g}, 24_{g}, 25_{g}, 26_{g}) formed in a layer (21, 22, 23, 24, 25, 26) of the multilayer scintillation detector, so as to collect the scintillation light emanating from the light guide to which it is coupled.

17. Detection device (1) according to Claim 16, comprising at least one optical coupling system (35), such that each pixel is optically coupled to a light guide by the optical coupling system.

18. Detection device according to either one of Claims 16 and 17, wherein at least one layer of the multilayer scintillation detector comprises an auxiliary detector (28), disposed in a channel, called measurement channel, the auxiliary detector being able to induce an optical or electronic signal when it is exposed to the ionizing radiation, the detection device comprising a measurement unit (29'), linked to the auxiliary detector, and configured to measure a level of irradiation detected by the auxiliary detector.

19. Device according to Claim 18, wherein the auxiliary detector (28) is a scintillator of GaN type, linked to an optical fiber (29), the optical fiber extending in the measurement channel.

20. Method for reconstructing a two-dimensional spatial distribution of an irradiation beam (Ω) emitted by an irradiation source (11), using the detection device (1) according to any one of Claims 16 to 19, the method comprising the following steps:
a) irradiation of the multilayer scintillation detector (20), of the detection device (1), by the irradiation source (11), the multilayer scintillation detector (20) extending according to a detection plane (P), the irradiation source producing an irradiation beam that is propagated through the detection plane;
b) detection, by pixels of the detection device (1), of a quantity of scintillation light emanating from each layer of the multilayer scintillation detector, so as to obtain, for each layer, a projection of the irradiation beam, in the detection plane, according to the orientation of the light guides of each layer;
c) from each projection obtained according to the step b), estimation of a two-dimensional spatial distribution of the irradiation beam according to the detection plane (P).

21. Method according to Claim 20, wherein:
- the multilayer scintillation detector comprises an auxiliary detector (28), disposed in a channel, called measurement channel, the auxiliary detector being able to induce an optical or electronic signal when it is exposed to the ionizing radiation;
- the detection device comprising a measurement unit (29'), linked to the auxiliary detector, and configured to measure a level of irradiation detected by the auxiliary detector;
the method comprising a step d) of realignment of the two-dimensional spatial distribution estimated in the step c) based on the level of irradiation detected by the auxiliary detector.

22. Method according to Claim 20 or Claim 21, wherein the steps a) to c) are performed by arranging a multilayer scintillation detector (20) at different distances from the irradiation source, so as to obtain, for each distance, a two-dimensional spatial distribution of the irradiation beam.
